# FASCICULE DE BREVET EUROPEEN

(11) **EP 3 717 432 B1**
(45) Date de publication et mention de la délivrance du brevet: **02.08.2023**
(21) Numéro de dépôt: 18827194.4
(22) Date de dépôt: 28.11.2018
(51) Int. Cl.: C03C 17/00, B32B 17/06, B60Q 1/00, G02B 6/00, G02B 27/00

(54) **VITRAGE DE VEHICULE A SIGNALISATION LUMINEUSE EXTERNE, VEHICULE L'INCORPORANT ET FABRICATION**
KRAFTFAHRZEUGVERGLASUNG FÜR AUSSENLICHTSIGNALISIERUNG, FAHRZEUG DAMIT UND IHRE HERSTELLUNG
EXTERIOR LIGHT SIGNALLING VEHICLE GLAZING, VEHICLE COMPRISING SAME, AND MANUFACTURING THEREOF

(30) Priorité: 30.11.2017 FR 1761449
(43) Date de publication de la demande: 07.10.2020
(73) Titulaire: SAINT-GOBAIN GLASS FRANCE, 92400 Courbevoie (FR)
(72) Inventeur: Berard, Mathieu, 75019 Paris (FR); Delrieu, Olivier, 91360 Epinay Sur Orge (FR); Bauerle, Pascal, 80500 Davenescourt (FR)
(74) Mandataire: Saint-Gobain Recherche
(86) Numéro de dépôt international: PCT/FR2018/053022
(87) Numéro de publication internationale: WO 2019/106291

(56) Documents cités:
- WO-A1-2005/018283
- US-A1- 2014 098 553
- US-A1- 2016 102 835

## Description

L'invention concerne un vitrage de véhicule à signalisation lumineuse externe ainsi qu'un véhicule comportant un tel vitrage et la fabrication d'un tel vitrage.

Il existe de plus en plus un vitrage de véhicule à signalisation lumineuse externe, par exemple US 2014/098553, US 2016/102835 ou WO 2005/018283.

En particulier il est commun de placer en face interne dite F2 un bloc lumière pour former un 3eme feu stop.

L'intégration peut être améliorée ainsi que le procédé de fabrication.

A cet effet, la présente demande a pour premier objet un vitrage de véhicule à signalisation lumineuse externe, choisie parmi une vitre arrière (lunette) et une vitre latérale (de préférence fixe, déflecteur) ou un parebrise, notamment automobile ou encore de transport en commun comprenant :
- un premier vitrage transparent, en verre minéral notamment trempé (thermiquement ou chimiquement) ou organique, éventuellement clair, extraclair, de préférence bombé, destiné à être le vitrage extérieur, avec des première et deuxième faces principales respectivement dites face F1 (face extérieure du véhicule) et face F2, et pour le véhicule automobile, en particulier vitrage en verre minéral ou organique d'épaisseur de préférence d'au plus 2,5mm, même d'au plus 2,2mm - notamment 1,9mm, 1,8mm, 1,6mm et 1,4mm- ou même d'au plus1,3mm ou d'au plus 1mm, avec de préférence une direction de référence,
- une source de lumière, qui est un élément électroluminescent, côté face F2 et apte à émettre de la lumière de signalisation externe (donc vers la face F2) - choisie à façon selon les normes, par exemple l'ambre ou le jaune (auto) pour un répétiteur de clignotant ou encore le rouge (auto) pour un (3eme) feu (stop)-, source de lumière ayant une surface de sortie vers la face F2 (et une surface d'entrée à l'opposé), et avec un demi angle d'émission au sommet de 50° à 70°, notamment 55 à 65°, et une direction d'émission principale normale au plan dudit élément électroluminescent, et même normale au plan (moyen) du vitrage (de préférence 90±5°,90±2° et même de 90°)
- l'élément électroluminescent, notamment transparent, a une surface émettrice de lumière de longueur d'au moins 5cm mieux d'au moins 10cm et même une largeur d'au moins 1cm ou 2cm mieux d'au moins 5cm et de préférence est d'épaisseur E0 subcentrimétrique et mieux submillimétrique.

De préférence, dans une (première) configuration, le vitrage comporte en regard dudit élément électroluminescent, entre la face F2 et ledit élément électroluminescent, une optique de collimation, ayant une face arrière côté surface de sortie et une face avant dite de collimation opposée à la face arrière.

L'optique de collimation, en matière transparente de préférence plastique (notamment thermoplastique, poly(éthylène téréphtalate) PET, poly(naphtalate d'éthylène) PEN, polyéthylène PE, poly(méthacrylate de méthyle) PMMA, polydiméthylsiloxane PDMS polyamide, polyimide, polyacrylate, polyester, polycarbonate, polysulfones, polyéthersulfones, thermoplastique polyuréthane) et/ou même flexible, est de préférence d'épaisseur (totale) E1 submillimétrique, mieux d'au plus 0,6mm ou 0,3mm ou 0,15mm. L'optique de collimation comporte, et même est, un film optique de préférence plastique (notamment thermoplastique, PET, PE, PC, PMMA, PDMS), notamment film partiellement texturé dans son épaisseur, ou en alternative film composite comportant un support transparent (plastique notamment comme précité) lisse avec une surcouche transparente texturée partiellement ou entièrement en épaisseur) ou un ensemble de films optiques de préférence plastiques (notamment comme précité), chacun comportant un réseau de motifs avec des sommets S et avec un pas T entre sommets qui est de 10µm à 500µm de préférence, avec de préférence au moins 4 ou même 10 motifs en regard de la surface de sortie (ou émettrice de lumière).

L'optique de collimation selon l'invention comporte ainsi :
a) un premier film optique et de préférence unique, avec sur la face avant dite de collimation ledit réseau de motifs bidimensionnels (vers la face F2), notamment un film texturé avec ledit réseau, notamment avec une épaisseur d'au plus 0,3mm ou 0,2mm ou 0,15mm
b) ou un ensemble d'au moins deux films optiques qui sont prismatiques, de préférence d'au plus deux films optiques prismatiques, comportant dans cet ordre en s'éloignant de la surface de sortie:
   - un premier film optique avec sur une face principale opposée à la surface de sortie, (dite face intermédiaire), un premier réseau de prismes (motifs prismatiques) ou, notamment un premier film texturé avec ledit premier réseau, s'étendant longitudinalement (suivant leur longueur) suivant un premier axe, notamment avec une épaisseur submillimétrique et même d'au plus 0,3mm ou 0,2mm ou 0,15mm
   - et en regard du premier film optique (de préférence espacé d'au plus 1mm ou fixé en périphérie par exemple collé ou soudé) un deuxième film optique avec sur une face principale opposée à la surface de sortie (de préférence formant ladite face avant) un deuxième réseau de motifs prismatiques, notamment un film texturé avec ledit deuxième réseau, -croisé avec le premier réseau de motifs prismatiques-, le deuxième réseau de prismes (motifs prismatiques) s'étendant longitudinalement suivant un deuxième axe formant un angle avec ledit premier axe de 90±10°, de préférence 90±5°,90±2° et même de 90°, le premier ou le deuxième axe forme avec la direction de référence un angle d'au plus 10°, mieux d'au plus 5° et même d'au plus 2°; et même est parallèle (angle à 0°), notamment avec une épaisseur submillimétrique et même d'au plus 0,3mm ou 0,2mm ou 0,15mm
c) ou un premier film optique unique avec sur la face avant dite de collimation un premier réseau de prismes (motifs prismatiques), notamment un film texturé avec ledit premier réseau, s'étendant longitudinalement suivant un axe formant un angle d'au plus 10° mieux d'au plus 5° et même d'au plus 2° avec la direction de référence et même parallèle, notamment avec une épaisseur submillimétrique et même E0 d'au plus 0,3mm ou 0,2mm ou 0,15mm.

Pour b) et c) chaque prisme étant défini par deux faces longitudinales le prisme ayant de préférence une longueur L et une largeur W avec L>2W et mieux L>5W ou L>10W.

Chaque prisme présente un angle au sommet a0 allant de 60 à 110°. Et chaque face longitudinale forme un angle a1, a2 allant de 30 à 55°, mieux de 35° à 50°, même de 40° à 50° et même de 45°±5°, 45°±1 ou de 45° avec le plan du film, de préférence a1-a2 est inférieur à 5° et même à 2° (prismes dits symétriques). En particulier pour b) et c):
- tout ou partie des prismes étant pointus avec les deux faces longitudinales planes et sécantes au sommet S chaque prisme pointu étant défini par l' angle au sommet a0 allant de 60 à 110°, mieux de 70° à 110°, même de 80° à 100° et même de 90°±5°, 90°±2 ou de 90°, chaque face longitudinale forme un angle a1, a2 allant de 30 à 55°, mieux de 35° à 50°, même de 40° à 50° et même de 45°±5°, 45°±1 ou de 45° avec le plan du film, de préférence la différence entre lesdits angles (définis par les faces longitudinales) a1-a2 est inférieure à 10°, à 5° et même à 2° (prismes dits symétriques)
- tout ou partie des prismes étant arrondis avec les deux faces longitudinales (chacune courbe ou au moins en partie courbe éventuellement avec une partie plane puis courbe vers le sommet), dans un plan normal P au plan du film et normal audit axe du prisme, l'intersection entre le plan P et chaque prisme arrondi forme une section comportant deux courbes C1, C2 jointives au sommet S, on définit deux droites D1 et D2 passant par les points d'inflexion I1 et I2 des deux courbes C1, C2, chaque droite formant un angle a1, a 2 allant de 30 à 55°, mieux de 35° à 50°, même de 40° à 50° et même de 45°±5°, 45°±1 ou de 45° avec le plan du film , et de préférence la différence entre lesdits angles (définies par les droites D1 et D2) a1-a2 est inférieure à 10°, à 5° et même à 2° (prismes dits symétriques)

chaque prisme arrondi étant défini par un cercle tangent au sommet S avec un rayon de courbure R1 compris entre T/10 et T/5 (ces droites D1 et D2 sont sécantes et forme un angle a0 (correspondant à l'angle au sommet) allant de 60 à 110°, mieux de 70° à 110°, même de 80° à 100° et même de 90°±5°, 90°±2 ou de 90°).
pour a) chaque motif bidimensionnel étant défini par un flanc, notamment au moins 3 faces latérales sécantes, le motif bidimensionnel présente de préférence un rapport de forme longueur L sur largeur W supérieur ou égal à 1 et d'au plus 2, même d'au plus 1,5 ou d'au plus 1,1

Lorsque les prismes sont jointifs on définit des vallées -en pointe ou arrondies- avec les mêmes tolérances sur l'angle dans la vallée que l'angle au sommet déjà décrit et sur le rayon de courbure éventuel dans la vallée.

Pour a), dans un plan P normal au film, le motif bidimensionnel présente un angle a0 allant de 60 à 110°, mieux de 70° à 110°, même de 80° à 100° et même de 90°±5°, 90°±2° ou de 90°, chaque intersection du flanc avec le plan P formant avec le plan du film un angle a1, a2 allant de 30 à 55°, mieux de 35° à 50°, même de 40° à 50° et même de 45°±5°, 45°±1 ou de 45°, de préférence la différence entre lesdits angles (définies par les 2 intersections) a1-a2 est inférieure à 10° , à 5° et même à 2° (motifs dits « symétriques »). En particulier pour a) :
- tout ou partie des motifs bidimensionnels étant pointus, pour chaque motif bidimensionnel pointu l'intersection entre un plan P normal au film passant par le sommet S et le motif bidimensionnel pointu forme une section triangulaire comportant deux droites D1 et D2 sécantes au sommet S formant l'angle au sommet a0 allant de 60 à 110°, mieux de 70° à 110°, même de 80° à 100° et même de 90°±5°, 90°±2 ou de 90°,
- chaque droite D1, D2 formant avec le plan du film un angle a1, a2 allant de 30 à 55°, mieux de 35° à 50°, même de 40° à 50° et même de 45°±5°, 45°±1 ou de 45° avec le plan du film de préférence la différence entre lesdits angles a1-a2 est inférieur à 10°, à 5° et même à 2° (motifs dits « symétriques »)
- tout ou partie des motifs bidimensionnels étant arrondis pour chaque motif bidimensionnel arrondi l'intersection entre un plan P normal au plan du film passant par le sommet S forme une section comportant deux courbes C1, C2 jointives au sommet S', on définit deux droites D1 et D2 passant par les points d'inflexion I1 et I2 des deux courbes, formant chacune un angle a1, a2 allant de 30 à 55°, mieux de 35° à 50°, même de 40° à 50° et même de 45°±5°, 45°±1 ou de 45° avec le plan du film, et dans ledit plan P chaque prisme arrondi étant défini par un cercle tangent au sommet S avec un rayon de courbure R1 compris entre T/10 et T/5 (ces droites D1 et D2 sont sécantes forment ledit angle au sommet a0 allant de 60 à 110°, mieux de 70° à 110°, même de 80° à 100° et même de 90°±5°, 90°±2 ou de 90°).

Dans ladite configuration, le vitrage comprend en outre en regard de l'optique de collimation, une optique de redirection (dite assymétrique), entre l'optique de collimation et la face F2, de préférence sur l'optique de collimation (fixée en périphérie, par exemple collée ou soudée ou espacée d'au plus 1mm), en matière transparente de préférence plastique (notamment thermoplastique, poly(éthylène téréphtalate) PET, poly(naphtalate d'éthylène) PEN, polyéthylène PE, poly(méthacrylate de méthyle) PMMA, polydiméthylsiloxane PDMS polyamide, polyimide, polyacrylate, polyester, polycarbonate, polysulfones, polyéthersulfones, thermoplastique polyuréthane, par exemple même matière que le (dernier) film optique de collimation ou les films de collimations), qui est de préférence d'épaisseur E'1 submillimétrique et même d'au plus 0,5mm ou 0,3mm, comporte un film optique de préférence plastique ou un ensemble de films optiques, de préférence plastiques, chacun comportant sur une face principale opposée à la surface de sortie un réseau de prismes assymétriques avec des sommets et avec un pas T' entre sommets qui est de 10µm à 500µm, de préférence avec au moins 4 ou même 10 motifs en regard de la surface de sortie (ou émettrice de lumière), l'optique de redirection comporte ainsi:
i) un premier film optique qui est prismatique assymétrique avec ledit réseau de prismes assymétriques s'étendant longitudinalement suivant un troisième axe formant un angle d'au plus 10°, au plus 5° ou au plus 2° avec ledit premier axe et même parallèle et/ou avec la direction de référence du vitrage, notamment avec une épaisseur submillimétrique et même d'au plus 0,3mm ou 0,2mm ou 0,15mm
j) ou un ensemble de deux films optiques qui sont prismatiques assymétriques, comportant dans cet ordre en s'éloignant de la surface de sortie:
   - un premier film optique assymétrique avec un réseau de prismes assymétriques, s'étendant longitudinalement suivant un troisième axe, notamment avec une épaisseur submillimétrique et même d'au plus 0,3mm ou 0,2mm ou 0,15mm le troisième axe forme chacun un angle avec la direction de référence (et même le premier axe), d'au plus 10°, d'au plus 5° ou au plus 2° et même est parallèle (0°).
   - et en regard du premier film optique assymétrique (de préférence espacé d'au plus 1mm ou fixé en périphérie par exemple collé ou soudé) un deuxième film optique notamment avec une épaisseur d'au plus 0,3mm ou 0,2mm ou 0,15mm , avec un deuxième réseau de motifs prismatiques -croisé avec le premier réseau de motifs prismatiques-, s'étendant longitudinalement suivant un quatrième axe formant un angle avec ledit troisième axe d'au plus 10°, de préférence d'au plus 5°, d'au plus 2° et même de 0° et/ou le quatrième axe forme un angle avec la direction de référence (et même le premier axe), d'au plus 10°, d'au plus 5° ou au plus 2° et même est parallèle (0°).

Pour i) et j) chaque prisme assymétrique étant défini par des première et deuxième faces longitudinales le prisme ayant de préférence une longueur L et une largeur W avec L>2W et mieux L>5W ou L>10W .

Chaque prisme assymétrique présente un angle au sommet a'0 allant de 50 à 60° mieux 55°±5°, 55°±2° ° et la première face longitudinale (dit grand côté) forme avec le plan du film optique asymétrique un premier angle a3, allant de 31 à 41° mieux de 35°±5°, 35°±2°. Naturellement la deuxième face longitudinale (dit petit côté) forme de préférence avec le plan du film optique asymétrique un deuxième angle a4, allant de 79 à 99° ou 90° mieux de 85 à 90°, de 88 à 90°, de préférence d'au plus 90°. De préférence la différence a4-a3 est supérieure à 40° et même à 50°.

En particulier pour i) et j) :
- tout ou partie des prismes assymétriques étant pointus avec les deux faces longitudinales planes et sécantes au sommet S1 chaque prisme pointu étant défini par ledit angle au sommet a'0
- tout ou partie des prismes asymétriques étant arrondis avec les deux faces longitudinales (chacune courbe ou au moins en partie courbe éventuellement avec une partie plane puis courbe vers le sommet), dans un plan normal P au plan du film et normal audit axe du prisme, l'intersection entre le plan P et chaque prisme arrondi forme une section comportant deux courbes C'1, C'2 jointives au sommet S1,
   on définit des premier et deuxième droites D'1 et D'2 passant par les points d'inflexion I'1 et I'2 des deux courbes C'1, C'2,
- une première droite D'1 formant ledit angle a3 avec le plan du film,
- une deuxième droite D'2 formant ledit angle a4 avec le plan du film,
chaque prisme assymétrique arrondi étant défini par un cercle tangent au sommet S1 avec un rayon de courbure R1 compris entre T'/10 et T'/5 (ces droites D'1 et D'2 sont sécantes et forme ledit angle au sommet a`0).

Lorsque les prismes assymétriques sont jointifs on définit des vallées -en pointe ou arrondi- avec les mêmes tolérances sur l'angle dans la vallée que l'angle au sommet déjà décrit et sur le rayon de courbure éventuel dans la vallée.

La normale au grand côté dirigée vers la face F2 est orientée vers le haut de la vitre arrière ou du pare brise ou vers l'avant de la vitre latérale.

En outre dans la (première) configuration:
- la direction de référence pour la vitre arrière ou le parebrise est l'horizontale dans le plan de la vitre ou du pare brise
et pour conserver la fonction de collimation et/ou de redirection :
- de l'air est entre la surface de sortie (lisse ou déjà texturée pour favoriser l'extraction de lumière comme un réseau lenticulaire etc) et la face d'entrée du premier film optique de l'optique de collimation ( face lisse, sans revêtement, sans texturation micrométrique...), notamment le premier film optique étant espacé de la surface de sortie de préférence d'au plus 1mm ou fixé en périphérie par exemple collé et avec un éventuel espaceur ou même soudée, éventuellement est en contact physique (non optique), éventuellement en contact physique avec la surface de sortie, par exemple espacé d'au plus 1mm
- pour b) et c) de l'air est entre les prismes de la face avant de l'optique de collimation, notamment les sommets des motifs sont espacées ou en contact physique avec un élément transparent (deuxième film éventuel ou film prismatique assymétrique)
- pour a) les motifs bidimensionnels sont en creux, le réseau de motifs bidimensionnels est un réseau de cavités (la paroi de chaque cavité formant le flanc notamment les faces latérales sécante jointives ou le flanc conique), les sommets S sont orientés à l'opposé de la face F2 et la surface haute de chaque cavité (en particulier définissant le contour de la base) est espacée ou en contact physique avec le (premier) film prismatique assymétrique ou les motifs bidimensionnels sont en reliefs orientés vers la face F2, les sommets des motifs de chaque face avant sont espacés ou en contact physique avec le (premier) film prismatique assymétrique, de l'air est entre les motifs bidimensionnels
- la face avant du dernier film prismatique assymétrique est espacée ou en contact physique avec un élément transparent distinct notamment d'épaisseur de préférence subcentimétrique (film de protection et/ou fonctionnel, un deuxième vitrage si vitrage feuilleté, face F4) et même d'au plus 0,3mm, 0,15 mm ou correspondant au premier vitrage (la face F2 du premier vitrage).

Dans une (deuxième) configuration alternative à l'ensemble optique de collimation/ de redirection déjà décrite, le vitrage comporte en regard de la surface de sortie une optique de redirection holographique, notamment en matière transparente de préférence plastique notamment thermoplastique (de préférence en polyester, en poly(éthylène téréphtalate) PET, polyéthylène PE polycarbonate PC, poly(méthacrylate de méthyle) PMMA, polystyrène, polyamide, polydiméthylsiloxane PDMS, poly(naphtalate d'éthylène) PEN, polyimide, polyacrylate, polysulfone, polyéthersulfone, (thermoplastique) polyuréthane), de préférence sur la surface de sortie (fixée en périphérie, par exemple collée voire soudée ou espacée d'au plus 1mm), l'optique de redirection holographique comporte une face avant vers la face F2 et une face arrière opposée, l'optique de redirection holographique, comporte, mieux est, un film notamment plastique avec un réseau de motifs holographiques (unidimensionnels par exemple prismatiques) sur la face avant de préférence d'épaisseur submillimétrique et même d'au plus 0,3mm, 0,15mm.

Et, dans cette (deuxième) configuration alternative de l'air est entre la surface de sortie et la face d'entrée de l'optique de redirection holographique, de l'air est entre les motifs holographiques de la face avant finale de l'optique de redirection holographique, la face avant du film de redirection holographique est espacée ou en contact physique avec un élément transparent distinct d'épaisseur de préférence subcentimétrique (film de protection et/ou fonctionnel, un deuxième vitrage si vitrage feuilleté, face F4) et même d'au plus 0,3mm, 0,15mm ou correspondant au premier vitrage.

En outre dans ces configurations :
- la direction de référence pour la vitre arrière ou le pare brise est l'horizontale dans le plan de la vitre arrière ou du pare brise (pour une redirection vers le sol)
- et la direction de référence pour la vitre latérale est la normale à l'horizontale dans le plan de la vitre pour une redirection vers l'arrière.

Selon l'invention, pour garantir leur efficacité on évite tout matière même transparente (colle, intercalaire de feuilletage) entre les motifs de chaque film et notamment on crée un gap d'air entre la surface de sortie et la face d'entrée du premier film optique.

Un contact physique (film contre surface de sortie) est toléré mais on préfère une lame d'air (épaisseur mieux contrôlée, moins de risques de zones irisées) par une fixation périphérique (collage de préférence) avec ou sans espaceur.

Selon l'invention, la (même chaque) fixation périphérique est de préférence entièrement hors (décalée, donc périphérique) de la surface émettrice de lumière. La largeur de la fixation peut être d'au plus 5mm.

Le ou les films optiques selon l'invention sont, efficaces, simples à mettre en oeuvre et peuvent être minces avec une épaisseur totale d'au plus 1mm ou même 0,5mm.

L'ensemble des films (collimation et redirection) peuvent former un empilement fixé en périphérie de la surface de sortie.

L'ensemble élément électroluminescent, optique de collimation et optique redirection peut être plat, parallèle à la face F2, plaqué ou collé en périphérie contre la face F2 ou la face F4 d'un vitrage feuilleté. L'ensemble élément électroluminescent, optique redirection holographique peut être plat, parallèle à la face F2, plaqué ou collé en périphérie contre la face F2 ou la face F4 d'un vitrage feuilleté.

Cet ensemble peut être compact, d'épaisseur totale d'au plus 10mm ou d'au plus 5mm.

L'élément électroluminescent est une source (quasi) lambertienne. C'est une source étendue par opposition aux sources de type ponctuelles telles que des diodes électroluminescentes inorganiques dites DEL (ou LED en anglais).

L'élément électroluminescent comme OLED ou QLED peut avoir collé sur sa surface de sortie déjà un film avec un réseau lenticulaire ou équivalent pour extraire la lumière souvent appelé EEL pour 'external extraction layer' en anglais ou une surface de sortie texturée à cet effet.

L'élément électroluminescent est de préférence une bande rectangulaire. De préférence la surface émettrice de lumière est une surface active unique ou est un ensemble de surfaces actives élémentaires de préférence de longueur au moins 1 ou 2cm agencées, espacées pour produire une lumière homogène sur une surface de préférence rectangulaire. La surface active unique est de préférence rectangulaire. Les surfaces actives élémentaires sont de préférence carrées ou rectangulaires.

On préfère des motifs pointus avec des faces planes mais un défaut de fabrication peut conduire à des motifs ondulés (flanc courbe et sommet arrondi). Ces motifs sont acceptables tels que délimités selon l'invention.

Naturellement on préfère pour b) ou c) former un ensemble de motifs prismatiques (prismes) unidimensionnels suivant l'axe longitudinal. Si, par des raisons de fabrication etc, le prisme unidimensionnel est divisé en morceaux dans le sens de la longueur alors les morceaux sont espacés d'une distance inférieure à <5L mieux à 10L ou à 20L.

Les motifs (prismes ou bidimensionnels) sont le plus proche possible les uns des autres, et ont par exemple leurs bases distantes de moins de 1mm, et de préférence de moins de 0,5mm.

De manière encore préférée, les prismes ou les motifs bidimensionnels et les prismes assymétriques sont jointifs ou essentiellement jointifs.

Des motifs (prismes etc) sont dit jointifs lorsqu'ils se touchent en au moins une partie de leur surface. On préfère que les motifs soient jointifs car ainsi ils sont plus nombreux, efficaces. Par exemple pour chaque film prismatique, on a un ensemble de motif prismatiques unidimensionnels suivant l'axe longitudinal, et jointifs par leurs bases.

Certains motifs bidimensionnels ne permettent pas une jonction totale entre les motifs. C'est notamment le cas lorsque si les bases sont de cercles même se touchant, il reste une certaine surface entre les cercles n'appartenant pas aux motifs. Par jonction totale, on entend le fait que le contour de la base d'un motif fait également entièrement partie des contours de ses motifs voisins.

Certains motifs peuvent être totalement jointifs, de sorte que l'intégralité de la surface (au moins celle fonctionnelle en regard de l'élément électroluminescent) du film optique fasse partie d'au moins un motif. Il s'agit de motif de pavage. En particulier, des motifs bidimensionnels à base carrée ou rectangulaire ou hexagonale peuvent être totalement jointifs si électroluminescent les bases sont identiques. Dans le cas de bases carrées ou rectangulaires, il convient également que lesdites bases soient alignées pour que les motifs soient totalement jointifs. Dans le cas de bases hexagonales, il convient que lesdites bases forment un nid d'abeille.

Chaque film transparent texturé couvrant l'élément électroluminescent (l'OLED ou OLED de préférence) peut être texturé par région, donc porteur d'une ou des régions texturées, en vis-à-vis d'un élément électroluminescent (OLED ou OLED) ou de plusieurs élément électroluminescent (OLED ou OLED) et les régions adjacentes (décalés de l'OLED ou OLED) sont lisses (pour laisser de la transparence).

On préfère que l'optique de collimation et/ou l'optique de redirection ne dépasse pas de la tranche du premier vitrage.

Lorsque le vitrage comporte plusieurs éléments électroluminescent comme OLED ou OLED il peut comporter de préférence une optique de collimation et même une optique de redirection par élément électroluminescent (tel que OLED ou OLED) ou une optique de collimation commune, et même une optique de redirection commune, pour plusieurs éléments électroluminescent comme OLED ou OLED). On préfère que l'optique de collimation et même l'optique de redirection soit le plus locale possible car cela génère du flou. En cas d'optique de collimation (et même optique de redirection) commune les films peuvent être lisses entre les éléments électroluminescents ou avec les motifs sur une largeur réduite (optique de collimation et même optique de redirection) des films par exemple d'au plus 5cm/ 1cm.

En particulier pour l'OLED, le vitrage peut comprendre un filtre coloré :
- entre la surface de sortie et la face arrière de l'optique de collimation notamment premier film optique
   ou
- entre la surface de sortie et la face d'entrée de l'optique de collimation holographique notamment film optique
- entre la face avant finale et la face F2 collée sur F2 ou en périphérie de la face avant finale de l'optique de redirection éventuellement holographique
- ou entre l'optique de redirection et un intercalaire de feuilletage, formant alors film de protection local.

De préférence pour les films optiques selon l'invention, il s'agit de préférence de motifs répétitifs, c'est-à-dire des motifs géométriques ayant sensiblement la même forme et placés sensiblement à égale distance les uns des autres et même sensiblement de même hauteur.

Bien entendu, la forme de la zone couverte par l'optique de collimation ou de redirection est indépendante de la forme des motifs.

Le motif bidimensionnel peut donc être :
- motif en relief, donc plein, par exemple avec une surface conique ou pyramidal, notamment des faces latérales sécantes séparées par des arêtes latérales,
- motif en creux (autrement dit inversé), le film est texturé avec un réseau de cavités la ou les parois de chaque cavité formant les faces latérales pyramidales ou le flanc conique, le sommet est orienté vers l'opposé de la face F2 et la surface haute de la cavité définissant le contour de la base.

Les motifs bidimensionnels se terminent par exemple en pointe, comme c'est le cas pour un cône ou une pyramide.

De préférence, le motif bidimensionnel présente des faces (latérales) planes et sécantes d'une pyramide. Si le motif bidimensionnel est une pyramide régulière, la base (comprise dans le plan général de la face texturée du film) est un triangle équilatéral.

Un cône classique ne présente pas de surface plane sur son flanc.

Chaque film optique a en entrée une faible rugosité de façon à éviter toute diffusion. Indépendamment de la rugosité, on peut définir une hauteur ou profondeur de motif (de texturation) qui est égale à la distance entre le point le plus haut et le plus bas d'un motif.

Les motifs (prismes ou bidimensionnels) ont de préférence pour hauteur de 10µm à 500 µm et mieux entre 100 et 300 µm, de préférence d'au moins 50µm et d'au plus 200µm.

La hauteur de chaque film optique (optique de collimation et optique de redirection) peut être comprise entre 5µm et 1mm, de préférence entre 10µm et 500µm, en particulier entre 20 et 300 µm, de préférence d'au moins 50µm et d'au plus 200µm.

Le film optique transparent peut être un film en matière plastique (polymère organique) comme déjà précité, de préférence en polyester, en poly(éthylène téréphtalate) ou PET, polycarbonate ou PC, poly(méthacrylate de méthyle) PMMA.

Le film optique transparent est de préférence flexible pour s'adapter à la ou aux courbures du vitrage (monolithique ou feuilleté) si bombé.

Le film optique (optique de collimation ou optique de redirection) peut comprendre un film plastique avec en surface une couche transparente avec lesdits motifs, texturée entièrement ou partiellement dans épaisseur.

De préférence chaque film optique (optique de collimation et optique de redirection) est un film plastique (monolithique) qui présente une texturation partielle dans son épaisseur, autrement dit avec une épaisseur constante entre la face lisse en entrée et le point le plus proche de la face texturée avant (côté F2). De préférence on définit l'épaisseur restante (constante) du film comme la distance entre le point le plus bas entre la face texturée avant et la face arrière. L'épaisseur restante est au moins 50µm et même d'au plus 200µm.

La texturation peut être réalisée par laminage (« cast » en anglais), thermoformage, gravure, notamment une gravure au laser pour un matériau polymère. Suivant la forme de la texturation visée, la fabrication peut ne pas forcément mener à des formes géométriques parfaites : sommet ou vallée arrondis etc.

L'optique de collimation selon a) ou b) peut être un premier film transparent texturé.

L'optique de collimation selon c) peut être un premier film transparent texturé et un deuxième film transparent texturé croisé.

L'optique de redirection selon i) peut être un premier film transparent texturé.

L'optique de redirection selon j) peut être un premier film transparent texturé et un deuxième film transparent texturé croisé.

De préférence concernant l'optique de collimation et/ou l'optique de redirection, on préfère les caractéristiques suivantes de préférence cumulatives :
- le ou chaque film optique est un film plastique partiellement texturé dans son épaisseur, de préférence avec une hauteur H des motifs avec une dispersion d'au plus 10%
- pour le a) les motifs bidimensionnels sont en creux, notamment film plastique partiellement texturé dans son épaisseur, les motifs bidimensionnels ont une base rectangulaire, carré ou circulaire et de préférence avec une hauteur H avec une dispersion d'au plus 10%, en particulier les motifs sont (quasi) de même hauteur donc avec des surfaces hautes dans un même plan
- pour a), b) ou c) l'angle au sommet A1 est de 90°±5° et même l'angle A2 est de 45°±5° et même l'angle au sommet A1 est de 90°±2° et même l'angle A2 est de 45°±2°
- pour i) et j) l'angle au sommet A1 est de 55°±5° et même l'angle A2 est de 35°±5 et même 'angle au sommet A1 est de 55°±2° et même l'angle A2 est de 35°±2°.

De préférence concernant l'élément électroluminescent, on préfère les caractéristiques suivantes de préférence cumulatives :
- l'élément électroluminescent est une diode électroluminescente organique dit OLED notamment transparent (TOLED) ou une diode électroluminescente à point quantique dit OLED ou même un TFEL (élément électroluminescent à couches minces)
- l'élément électroluminescent, notamment OLED ou QLED, est transparent, et présente une transmission lumineuse d'au moins 20% et même d'au moins 50%.
- l'élément électroluminescent est un OLED qui est à émission par l'arrière comportant un support qui porte côté opposé à la face F2 une sous couche fonctionnelle éventuelle, une anode transparente, un système électroluminescent organique, une cathode réfléchissante, notamment avec sur la surface côté opposé à la face F2, et même un ou des bords sombres adjacents à la surface lumineuse (par exemple techniques, pour l'alimentation électrique) par exemple de largeur subcentimétrique d'au plus 1cm, ou 5 mm ou 1mm, l'optique de collimation et même l'optique de redirection étant fixée (collée voire soudée etc) de préférence au moins en partie en regard des bords techniques.

L'OLED peut comprendre aussi une couche d'encapsulation couvrant l'ensemble (la surface active) : résine par exemple transparente ou encore film plastique adhésivé, ce film plastique muni de zones électroconductrices peut servir pour la connexion électrique.

En particulier, dans un véhicule ce qui émet vers l'avant est blanc; vers l'arrière est rouge; et sur côtés ambre (jaune auto).

Pour la vitre arrière l'ensemble source de lumière (notamment OLED) et optique de collimation et optique de redirection peut former un (troisième) feu stop ou un (répétiteur de) clignotant, un feu de gabarit, de position

Pour la vitre arrière ou le parebrise l'ensemble source de lumière (notamment OLED) et optique de redirection holographique formant un (troisième) feu stop ou un (répétiteur de) clignotant, un feu de gabarit, de position ou la source de lumière (notamment OLED) est une signalétique, un pictogramme (symbole, lettres signes etc) notamment horizontale en bordure inférieure ou latérale de la vitre ou encore dans au centre de la vitre, en particulier pictogramme d'alerte comme triangle de secours ou sur le trafic ou information notamment sur distance de sécurité.

La source de lumière peut être une bande droite ou courbe par exemple suivant un bord courbe ou un contour de masquage (d'une couche opaque notamment émail, noir) etc de la vitre.

Par exemple (pour la vitre arrière ou le parebrise) la source de lumière (notamment OLED) émet de préférence dans le rouge (auto) notamment est une bande lumineuse de préférence rectangulaire et périphérique et même horizontale.

Par exemple (pour la vitre arrière ou le parebrise) la source de lumière (notamment OLED) émet de préférence dans le jaune (auto) notamment est une bande lumineuse de préférence rectangulaire et périphérique et horizontale, notamment horizontale en bordure inférieure ou latérale de la vitre.

En particulier la source de lumière notamment OLED est une bande lumineuse rectangulaire et périphérique, notamment horizontale en bordure inférieure ou latérale de la vitre arrière, notamment l'ensemble source de lumière et optique de collimation et optique de redirection formant un (répétiteur de) clignotant, un feu de gabarit, de position ou l'ensemble source de lumière et optique de redirection holographique formant un (répétiteur de) clignotant, un feu de gabarit, de position.

En particulier, la source de lumière notamment OLED est une signalétique, un pictogramme notamment est horizontale en bordure inférieure ou latérale de la vitre ou encore dans au centre de la vitre, en particulier pictogramme d'alerte comme triangle de secours ou sur le trafic ou d'information notamment sur distance de sécurité

En particulier, la source de lumière notamment OLED émet dans le rouge (auto), notamment est une bande lumineuse de préférence rectangulaire et périphérique, donc en bordure du clair de vue, notamment en bordure supérieure de la vitre (face F4 ou F2) et centré, l'ensemble source de lumière et optique de collimation et optique de redirection formant un troisième feu stop, un feu de gabarit, de position ou l'ensemble source de lumière et optique de redirection holographique formant un troisième feu stop, un feu de gabarit, de position.

En particulier, (pour la vitre arrière ou le parebrise) la source de lumière émet dans le jaune (auto), notamment est une bande lumineuse de préférence rectangulaire et périphérique, donc en bordure du clair de vue, notamment en bordure inférieure de la vitre (face F4 ou F2), l'ensemble source de lumière et optique de collimation et optique de redirection formant par exemple un clignotant ou l'ensemble source de lumière et optique de redirection holographique formant par exemple un (répétiteur de) clignotant.

Pour produite une lumière rouge (auto) -ou jaune- pour la vitre arrière on peut utiliser un élément électroluminescent (comme OLED ou QLED) émettant une lumière blanche et ensuite utiliser un filtre coloré rouge -ou jaune-. Un film de protection local entre la face avant finale et la face F2 peut être ledit filtre coloré (rouge et ou toute autre couleur nécessaire).

La vitre arrière peut être dans une porte de coffre, une porte de véhicule utilitaire ou encore être une lunette.

La source de lumière peut être opaque et/ou masquée de l'intérieur par une couche de masquage (en F4 si vitrage feuilleté et source entre F2 et F3) ou par un film de protection.

On peut souhaiter empêcher la lumière d'aller dans l'intérieur (monodirectionnel) en particulier par la vitre latérale et le pare-brise.

La source de lumière peut être transparente /ou masquée de l'intérieur par une couche de masquage (en F4 si vitrage feuilleté et source entre F2 et F3) ou par un film de protection.

Une couche de masquage extérieur (en face F2) peut être munie d'une épargne au droit de la source de lumière.

On peut souhaiter une ou des lumières d'autres couleurs : bleu , orange, vert etc.

On peut prévoir plusieurs zones lumineuses OLED ou de TFEL ou de OLED (chacune est une bande rectangulaire, carrée, toute forme souhaitée) avec une couleur identique ou non, pilotées ensemble (on et off simultané par exemple) - remplissant une même fonction par exemple-, par exemple espacées d'au plus 80mm ou 75mm.

La vitre arrière (ou latérale ou pare-brise) peut comporter une pluralité d' éléments électroluminescents en particulier OLED ou de TFEL ou de OLED chacun avec l'optique de redirection holographique ou avec l'ensemble optique de collimation et optique de redirection notamment sources de lumières en bordure supérieure de la vitre arrière émettant d'une couleur identique ou non

Pour le pare brise ce peut être un feu dirigé vers l'avant type DRL (day running light en anglais) ou un pictogramme lumineux etc.

Pour la vitre latérale, notamment fixe, comme un déflecteur, l'ensemble source de lumière en particulier OLED ou de TFEL ou de OLED et optique de collimation et optique de redirection assymétrique peut former un (répétiteur de) clignotant ou l'ensemble source de lumière et optique de redirection holographique peut former un (répétiteur de) clignotant.

Par exemple la source de lumière en particulier OLED ou de TFEL ou de OLED émet dans le jaune (auto), est une bande lumineuse de préférence rectangulaire périphérique, donc en bordure du clair de vue, notamment en bordure inférieure ou latérale et même latérale arrière, l'ensemble source de lumière et optique de collimation et optique de redirection formant un répétiteur de clignotant ou l'ensemble source de lumière et optique de redirection holographique formant un répétiteur de clignotant.

La vitre latérale peut être de forme rectangulaire ou quadrilatère (bord haut plus réduit).

Pour produite une lumière jaune (auto) pour la vitre arrière on peut utiliser un élément électroluminescent (comme OLED ou QLED) émettant une lumière blanche et ensuite utiliser un filtre jaune. Un film de protection local entre la face avant finale t la face F2 peut être ledit filtre.

La source de lumière (comme OLED ou OLED) peut aussi être une signalétique, un pictogramme.

Par exemple, pour une vitre latérale on choisit plusieurs OLEDs ou de TFEL ou de QLED, chacune avec l'optique de redirection holograhique ou avec l'ensemble optique de collimation et optique de redirection notamment sources de lumières espacées d'au plus 85mm, agencées à l'horizontale ou même à la verticale (ou latéralement au moins.

Le vitrage peut comprendre un vitrage feuilleté comportant :
- ledit premier vitrage (transparent),
- un deuxième vitrage (transparent), en verre minéral ou même organique, de préférence bombé et de préférence clair ou extraclair voire teinté (moins que le premier vitrage), vitrage destiné à être le vitrage intérieur, avec des troisième et quatrième faces principales respectivement face F3 et face F4, pour le véhicule automobile, d'épaisseur de préférence inférieure à celle du premier vitrage, même d'au plus 2mm - notamment 1,9mm, 1,8mm, 1,6mm et 1,4mm- ou même d'au plus 1,3mm ou de moins de 1,1mm ou encore de moins de 0,7mm notamment d'au moins 0,2mm, l'épaisseur totale des premier et deuxième vitrages étant de préférence strictement inférieure à 4mm, même à 3,7mm, le deuxième vitrage pouvant être trempé chimiquement
   entre les faces F2 et F3 qui sont les faces internes du vitrage feuilleté un intercalaire de feuilletage transparent, éventuellement clair, extraclair ou même teinté notamment gris ou vert (partiellement teinté dans son épaisseur si multifeuillet par exemple), en matière polymérique de préférence thermoplastique et mieux encore en polyvinylbutyral (PVB), intercalaire de feuilletage (feuillet unique, feuillet composite) ayant une face principale FA côté face F3 et une face principale FB côté face F2, (dans une région décalée, notamment adjacente, de l'élément électroluminescent, notamment OLED ou QLED, et par exemple région couvrant au moins 50% et même 80% ou 90% de la surface du vitrage) la face FA est en contact adhésif avec la face F3 (nue ou revêtue d'un revêtement) et la face FB est en contact adhésif avec la face F2 (nue ou revêtue d'un revêtement), notamment l'élément électroluminescent notamment OLED ou OLED étant entre les faces F2 ou F3 et de préférence l'optique de collimation et l'optique de redirection assymétrique entre les faces F2 ou F3 ou l'optique de redirection assymétrique holographique est entre les faces F2 ou F3
   ou l'élément électroluminescent notamment OLED ou OLED sur la face F4 et de préférence l'optique de redirection assymétrique holographique est coté face F4 ou de préférence l'optique de collimation et l'optique de redirection assymétrique sont côté face F4.

L'intercalaire de feuilletage est d'épaisseur E_{A} entre la face FA et FB -qui pour le véhicule automobile- est de préférence d'au plus 1,8mm, mieux d'au plus 1,2mm et même d'au plus 0,9mm (et mieux d'au moins 0,3mm et même d'au moins 0,6mm), notamment en retrait du chant du premier vitrage d'au plus 2mm et en retrait du chant du deuxième vitrage d'au plus 2mm, notamment étant un premier feuillet acoustique et/ou teinté.

L'intercalaire de feuilletage formé à partir d'un ou plusieurs feuillets - avant, arrière central..- peut être de préférence en polyvinylbutyral (PVB), ou encore en polyuréthane (PU), en copolymère éthylène/acétate de vinyle (EVA), ayant par exemple une épaisseur entre 0,2mm et 1,1mm. L'intercalaire de feuilletage peut être éventuellement composite dans son épaisseur comme détaillé plus tard (PVB/film plastique tel que polyester, PET etc/PVB).

On peut choisir un PVB classique comme le RC41 de Solutia ou d'Eastman.

L'intercalaire de feuilletage (feuillet en face arrière et/ou avant et/ou central) - peut comprendre au moins une couche dite centrale en matériau plastique viscoélastique aux propriétés d'amortissement vibro-acoustique notamment à base de polyvinylbutyral (PVB) et de plastifiant, et l'intercalaire, et comprenant en outre deux couches externes en PVB standard, la couche centrale étant entre les deux couches externes. Comme exemple de feuillet acoustique on peut citer le brevet EP0844075. On peut citer les PVB acoustiques décrits dans les demandes de brevet WO2012/025685, WO2013/175101, notamment teinté comme dans le WO2015079159.

L'intercalaire de feuilletage peut comporter un PVB acoustique et/ou est un PVB teinté, l'intercalaire de feuilletage notamment est un PVB au moins partiellement dans son épaisseur. La partie teintée est au moins (et même au plus) entre l'élément électroluminescent (OLED, QLED..).est la face F3.

Un vitrage feuilleté selon l'invention peut être avec :
- le premier vitrage en verre minéral, le deuxième vitrage en verre minéral par exemple plus mince
- le premier vitrage en verre minéral, le deuxième vitrage en verre organique par exemple plus mince (PET, PC, PMMA etc) éventuellement avec une surcouche de protection en face F4 ('hard coat').

L'optique de collimation et l'optique de direction assymétrique ou l'optique de direction holograhique sont par exemple avec l'élément électroluminescent dans le feuilleté ou sur la face F4. En particulier dans le cas d'un vitrage feuilleté (déjà décrit) :
- l'optique de collimation est plus large que l'élément électroluminescent (OLED, OLED..) et est fixée de préférence collée en périphérie par un adhésif notamment transparent ou en périphérie est en contact adhésif via sa face arrière audit intercalaire de feuilletage et éventuellement l'optique de redirection est plus large que l'élément électroluminescent et est fixée en périphérie de préférence collée par un adhésif notamment transparent via sa face arrière à l'optique de collimation
- ou l'optique de collimation est fixée en périphérie, de préférence collée, par un adhésif notamment transparent à la surface de sortie et l'optique de redirection est plus large que l'élément électroluminescent et est fixée en périphérie de préférence collée (ou encore soudée) par un adhésif notamment transparent audit intercalaire de feuilletage ou est en périphérie en contact adhésif (sans apport de matière) via sa face arrière audit intercalaire de feuilletage (notamment feuillet central, en particulier PVB).

L'élément électroluminescent (OLED, QLED..).seul ou avec l'optique de redirection holographique ou avec l'optique de collimation et l'optique de redirection assymétique peut avoir une épaisseur trop importante pour être feuilleté, via un feuillet intercalaire ou entre deux feuillets intercalaires.En particulier l'élément électroluminescent (OLED, OLED..) peut être logé dans une ouverture de l'intercalaire de feuilletage et même l'optique de collimation voire aussi l'optique de redirection assymétrique ou l'optique de redirection holographique est logée dans ladite ouverture (et même fixée en périphéries par exemple collée à l'élément électroluminescent (OLED, QLED..), l'ouverture est borgne avec un fond en direction de la face F3 et débouchante sur la face F2, ou l'ouverture dite interne est dans l'épaisseur de l'intercalaire de feuilletage et ledit élément transparent est un film de protection logé dans ladite ouverture interne ou plus large que ladite ouverture interne et couvrant ladite ouverture interne.

L'ouverture est utile en particulier lorsque E0 (ou E0+E1 si optique de collimation ou E0+E'1 si optique de redirection holographique logée ou E0+E1+E'1 si optique de redirection assymétrique logée) est supérieure à 0,15mm. L'ouverture de l'intercalaire de feuilletage facilite la mise en place, l'intégration et améliore les performances.

Contre toute attente dans le cas d'une ouverture débouchante l'intercalaire ne flue pas assez pour gêner le fonctionnement de l'optique de collimation éventuelle ou de redirection. En particulier, la mise sous vide vient plaquer l'optique de redirection contre la face F2.

De préférence, l'élément électroluminescent (OLED, OLED..) et l'optique de collimation et même l'optique de redirection (ou l'optique de redirection holographique) sont dans des ouvertures (de préférence) d'un PVB ou d'un PVB/film fonctionnel avec un éventuel revêtement fonctionnel/PVB.

De préférence, le vitrage présente l'une au moins des caractéristiques suivantes :
- l'ouverture est dans une épaisseur de PVB (un ou plusieurs feuillets, avec interface discernable notamment)
- l'ouverture est dans un intercalaire de feuilletage acoustique, en particulier tricouche ou quadricouche
- l'ouverture est dans un intercalaire de feuilletage teinté
- l'ouverture est dans une matière composite (multifeuillets) : PVB/film plastique transparent ou encore PVB/film plastique transparent/PVB, ledit film plastique, notamment un polyester, un PET ou autre plastique déjà cité, d'épaisseur submillimétrique et même d'au plus 0,2mm, ou d'au plus 0,1mm étant porteur d'un revêtement fonctionnel :basse émissivité ou de contrôle solaire et/ou encore chauffant.

Naturellement, la face FB peut être en contact direct avec la face F2 ou avec un revêtement fonctionnel classique sur cette face, notamment un empilement de couches minces (incluant une ou des couches argent) tel que : couche chauffante, antennes, couche de contrôle solaire ou basse émissivité ou une couche décor ou de masquage (opaque) comme un émail généralement noir.

La face FA peut être en contact direct avec la face F3 ou avec un revêtement fonctionnel classique sur cette face, notamment un empilement de couches minces (incluant une ou des couches argent) tel que : couche chauffante, antennes, couche de contrôle solaire ou basse émissivité ou une couche décor ou de masquage (opaque) comme un émail généralement noir.

Le verre de préférence interne, notamment mince d'épaisseur de moins de 1,1mm, est de préférence trempé chimiquement. Il est de préférence clair. On peut citer les exemples des demandes WO2015/031594 ou WO2015066201.

Les films optiques peuvent être fixés entre eux en périphérie par exemple collés de notamment par un adhésif (colle, adhésif double face) de préférence transparent ou simplement (contact par les sommets d'un film sur l'arrière de l'autre film)

De préférence concernant la fixation de l'optique de collimation, on préfère les solutions suivantes:
- l'optique de collimation est fixée (et de préférence collée ou encore soudée etc) à l'élément électroluminescent (OLED, OLED..) via sa face arrière, notamment par un adhésif (colle, adhésif double face) de préférence transparent (en périphérie de la surface de sortie mieux de la surface émettrice),
- l'optique de redirection assymétrique est de préférence fixée à l'optique de collimation notamment par un adhésif de préférence transparent en périphérie de la face avant finale
- et/ou l'optique de redirection assymétrique ou holographique est fixée et de préférence collée ou encore soudée etc) à l'élément transparent (film de protection, deuxième vitrage, voire intercalaire de feuilletage etc), notamment par un adhésif (colle, adhésif double face) de préférence transparent en périphérie de la face avant.

On préfère un adhésif (colle, adhésif double face) transparent si l'adhésif est dans le clair de vitre. On peut choisir un autre moyen de fixation comme une soudure (formant un contact adhésif local sans apport de matière).

Dans un exemple d'un vitrage feuilleté avec un intercalaire de feuilletage arrière à la source, l'optique de collimation est entre la face F2 et F3, l'élément électroluminescent (OLED, OLED..) est entre la face F2 et F3 et dans la zone avec l'élément électroluminescent, la face FA est en contact adhésif avec la face F3 et la face FB en contact adhésif avec la surface d'entrée, l'élément transparent étant le deuxième vitrage (nu ou revêtu).

Dans un exemple d'un vitrage feuilleté, l'élément électroluminescent (OLED, OLED..) est entre la face F2 et F3, l'optique de redirection holographique ou l'optique de collimation et l'optique de redirection assymétrique est entre l'élément électroluminescent et la face F2,
et dans la zone avec l'élément électroluminescent (OLED, OLED..) la face FA en contact adhésif avec la face F3 (notamment feuillet PVB dit arrière) ou du côté de la surface de sortie (notamment feuillet PVB dit avant), et la face FB en contact adhésif avec la face F2 et l'élément transparent est un film de protection plastique notamment polyester, notamment PET par exemple d'épaisseur E4 submillimétrique, sur la face avant finale, avec une face orientée vers la face F2 et en contact adhésif avec l'intercalaire de feuilletage et (avec une face orientée vers la face F3 contre la face avant finale en laissant l'air entre les prismes asymétriques ou les motifs holographiques).

Le film de protection plastique est local éventuellement avec une zone dite extension dépassant des bords de la face avant finale d'au plus 10cm, même d'au plus 5cm ou 1cm, notamment avec l'extension en contact adhésif avec l'intercalaire de feuilletage. Le film de protection transparent (local ou couvrant) peut être un film en matière plastique (polymère organique), notamment thermoplastique, de préférence en polyester, en poly(éthylène téréphtalate) PET, polyéthylène PE polycarbonate PC, poly(méthacrylate de méthyle) PMMA, polystyrène, polyamide, polydiméthylsiloxane PDMS, poly(naphtalate d'éthylène) PEN, polyimide, polyacrylate, polysulfone, polyéthersulfone, (thermoplastique) polyuréthane). Il est par exemple de même matière que le film de collimation et/ou de redirection.

L'intercalaire de feuilletage peut être composite et comporte l'empilement suivant hors de zone de l'élément électroluminescent (OLED, QLED..). : PVB/film plastique fonctionnel notamment polyester, PET (et autres précités) avec un éventuel revêtement fonctionnel électroconducteur côté face F2 ou F3 /PVB, le film plastique fonctionnel de préférence d'épaisseur E'4 submillimétrique s'étendant sur la face F2. Et l'élément électroluminescent (OLED, OLED..) est entre la face F2 et F3, entre la face avant et la face F3 est présent ledit film plastique/ledit PVB, l'élément transparent est le film plastique fonctionnel sur la face avant.

Le film de protection local par exemple couvrir au plus 20% ou au plus 10% ou 5% de la surface du vitrage. En particulier, l'optique de collimation et/ou l'optique de redirection holographique ou assymétrique et le film avant, peuvent être de même taille (et de même taille que l'élément électroluminescent (OLED, OLED..) ou en retrait de la tranche couvrant au moins la surface active)) ou la surface du film avant est plus grande et de préférence ne dépasse pas de la tranche de l'optique de collimation de plus de 10 ou 5 ou 1cm.

Alternativement, le film de protection peut couvrir au moins 30%, 50%,80%, à 90% de la face F2 ou (par exemple en retrait d'au plus 5cm ,1cm, ou 5mm de la tranche du premier vitrage). De préférence il est porteur d'un revêtement fonctionnel basse émissivité ou de contrôle solaire et/ou encore chauffant notamment couvrant au moins 80% ou 90% de la face F2.

Concernant la localisation de l'élément électroluminescent (et de son optique de collimation) :
- la face F2 peut être libre, le vitrage est monolithique par exemple en verre, PMMA, PC, et l'optique de redirection holographique ou assymétrique est sur la face F2 ou si le vitrage est feuilleté et l'optique de redirection holographique ou assymétrique est sur la face F4 libre,
- l'optique de collimation est fixée en périphérie notamment collée à l'élément électroluminescent, via sa face arrière, notamment par un adhésif de préférence transparent (colle, adhésif double face) en périphérie de la surface de sortie et/ou l'ensemble élément électroluminescent / optique de collimation /optique de redirection assymétrique ou élément électroluminescent /optique de redirection holographique est fixée notamment collée de préférence par un adhésif de préférence transparent (colle, adhésif double face) à la face libre F4 ou F2 via un film arrière de protection (collant etc) qui est sur la surface d'entrée dudit élément électroluminescent avec une partie dépassante de fixation sur la face libre F4 ou F2.

Le film arrière de protection peut avoir une autre fonction. Il peut être teinté, et/ou porteur d'un revêtement électroconducteur (contrôle solaire, low E etc) notamment couvrant au moins 80% ou 90%.

Le film arrière de protection notamment couvrant au moins 80% ou 90% de la face F2 peut être composite par un PET avec une surcouche de protection (dite « hard coat »).

Dans le cas de la fixation sur une face libre F2 ou F4, pour éviter une surépaisseur sur la face libre F2 ou F4, E0 est d'au plus 1mm et même d'au plus 0,5mm. De préférence l'épaisseur de l'ensemble élément électroluminescent (comme OLED ou QLED)/ optique de collimation / optique de redirection assymétrique ou l'épaisseur de l'ensemble élément électroluminescent (comme OLED ou OLED) / optique de redirection holographique est d'au plus 1mm même 0,9mm.

De préférence lorsque l'élément électroluminescent est entre les faces F2 et F3, pour éviter une surépaisseur d'intercalaire de feuilletage, E0 est d'au plus 1mm et même d'au plus 0,5mm.

Quelle que soit la localisation (sur face F2 ou F4 libre ou entre F2 et F3 d'un vitrage feuilleté) l'élément électroluminescent (comme OLED ou OLED) peut être local par exemple couvrir au plus 20% ou au plus 10% ou même d'au plus 5% de la surface du vitrage et/ou l'optique de collimation peut être locale par exemple couvrir au plus 20% ou au plus 10% ou 5% de la surface du vitrage.

En particulier, l'élément électroluminescent (comme OLED ou OLED), l'optique de collimation et/ou l'optique de redirection peuvent être de même taille ou en retrait de la tranche (couvrant au moins la surface active) ou la surface de l"optique de collimation et/ou de l'optique de redirection est plus grande et de préférence ne dépasse pas de la tranche de l'élément électroluminescent de plus de 10 ou 5 ou 1cm.

Le film (arrière) de protection peut être local par exemple couvrir au plus 20% ou au plus 10% ou 5% de la surface du vitrage. En particulier, l'optique de collimation l'optique de redirection et le film arrière peuvent être de même taille (et de même taille que l'élément électroluminescent ou en retrait de la tranche couvrant au moins la surface active)) ou la surface du film arrière est plus grande et de préférence ne dépasse pas de la tranche de l'optique de collimation et de l'optique de redirection de plus de 10 ou 5 ou 1cm.

Alternativement, le film (arrière) de protection peut couvrir au moins 30%, 50%, 60%, 90% de la face F2 (par exemple en retrait d'au plus 5 ou 1cm ou 5mm de la tranche du premier vitrage). Par exemple il est porteur d'un revêtement fonctionnel basse émissivité ou de contrôle solaire et/ou encore chauffant.

Un élément de connexion électrique dudit élément électroluminescent peut être lié audit élément électroluminescent et dépasser de la tranche du vitrage.

Un élément de connexion électrique de préférence flexible peut être fixé (collé, soudé etc) ou plaqué contre l'élément électroluminescent, de préférence l'élément de connexion électrique dépasse de la tranche du vitrage. Il est par exemple d'épaisseur qui est d'au plus 0,2mm ou d'au plus 0,15mm et même d'au plus 0,1mm.

L'élément de connexion électrique (bande ou fils) peut être lié à l'élément électroluminescent dans une (ou plusieurs) zone périphérique de la surface de sortie ou d'entrée.

Dans un mode de réalisation, l'élément de connexion électrique est un ensemble de deux fils métalliques ou de bandes métalliques.

Dans un mode de réalisation, l'élément de connexion électrique est une bande (connecteur plat) qui comporte un film en matière plastique de préférence transparent, de préférence en polyester, poly(éthylène téréphtalate) ou PET ou en polyimide, pourvue de pistes conductrices, notamment métalliques (cuivre etc) ou en oxyde conducteur transparent.

Les pistes conductrices sont imprimées ou déposées par toute autre méthode de dépôt par exemple dépôt physique en phase vapeur. Les pistes conductrices peuvent aussi être des fils. On préfère que les pistes conductrices et le film soient transparents lorsqu'ils sont visibles c'est-à-dire qu'ils ne sont pas masquées par un élément (couche) de masquage (tel qu'un émail voire une peinture etc) notamment en face F4 ou F3. Les pistes conductrices peuvent être transparentes de par la matière transparente ou par leur largeur suffisamment fine pour être (quasi) invisibles.

Des films de polyimide ont une tenue en la température plus élevée par rapport à l'alternative PET ou même PEN (poly(naphtalate d'éthylène).

L'élément de connexion électrique peut être (out ou partie) dans le clair de vitre, espacée ou non des bandes périphériques opaques (même formant cadre opaque) comme un émail de masquage (noir, foncé etc). Le plus souvent, il y a une couche opaque en face F2 et une couche opaque en face F4 voire F3. Leurs largeurs sont identiques ou distinctes.

La largeur Li d'une bande périphérique opaque en face F2 et/ou F3 et/ou F4 est de préférence d'au moins 10mm et même 15mm. Aussi, la longueur de lélément de connexion électrique peut être supérieure à Li.

L'élément de connexion électrique peut être agencé dans ou au voisinage de la région d'une couche opaque, notamment un émail (noir), le long d'un bord périphérique du vitrage feuilleté, généralement en face F2 et/ou face F4 ou encore en face F2 et/ou en face F3.

Aussi, dans un premier mode de réalisation, l'élément de connexion électrique peut même être disposé dans une région du vitrage dans laquelle le verre extérieur est entièrement (ou partiellement) opaque par la couche opaque (la plus externe), comme un émail (noir), en F2. Cette couche opaque peut être dans cette région du vitrage une couche pleine (fond continu) ou une couche avec une ou des discontinuités (surfaces sans couche opaque) par exemple couche sous forme d'un ensemble de motifs géométriques (en rond, rectangle, carré etc),ou non, de taille identiques ou distinctes (de taille de plus ou plus petite en s'éloignant de la tranche et/ou motifs de plus ou plus espacés en s'éloignant de la tranche).

Dans ce premier mode de réalisation, l'élément électroluminescent comme l'OLED ou OLED et l'élément de connexion électrique peut être visible uniquement à l'intérieur et donc masqué par la couche opaque en face F2.

L'élément de connexion électrique peut être disposé dans une région du vitrage dans laquelle le verre intérieur est opaque par une couche opaque (la plus interne) comme un émail (noir) de préférence en F4 voire en F3. L'élément électroluminescent comme l'OLED ou OLED peut être disposé cette région du vitrage, cette couche opaque comporte alors une épargne (par un masque au dépôt ou par retrait notamment laser) au droit de l'élément électroluminescent.

L'élément électroluminescent est placé à façon à l'avant comme à l'arrière du véhicule par exemple le long d'un bord longitudinal ou latéral du vitrage. On préfère une liseuse en regard de chaque siège.

En cas de plusieurs éléments électroluminescent ils peuvent être connectés en série ou en parallèle et/ou indépendamment. Deux éléments électroluminescents peuvent être sur un élément commun qui sert pour la connexion électrique.

Deux éléments électroluminescents peuvent être séparés et reliés entre eux par un élément de connexion électrique de préférence le plus discret possible par exemple des fils ou un connecteur plat transparent.

Dans un mode de réalisation du véhicule, il comporte au moins une unité de commande pour piloter l'élément électroluminescent (comme OLED ou QLED) et même au moins un capteur notamment pour détecter la luminosité. Une unité de commande pour piloter le (chaque) élément électroluminescent (OLED ou OLED) peut être dans le vitrage feuilleté ou sur le vitrage.

Afin de limiter l'échauffement dans l'habitacle ou de limiter l'usage d'air conditionné, le premier vitrage ou l'un des vitrages au moins (de préférence le verre extérieur) est teinté. Et le vitrage, en particulier feuilleté, peut comporter également une couche réfléchissant ou absorbant le rayonnement solaire, de préférence en face F4 ou en face F2 ou F3, en particulier une couche d'oxyde transparent électro-conducteur dite couche TCO ou même un empilement de couches minces comprenant au moins une couche TCO, ou d'empilements de couches minces comprenant au moins une couche d'argent (en F2 ou F3 de préférence pour un vitrage feuilleté), la ou chaque couche d'argent étant disposée entre des couches diélectriques.

On peut cumuler couche (à l'argent) en face F2 et/ou F3 et couche TCO en face F4. La couche TCO (d'un oxyde transparent électro-conducteur) est de préférence une couche d'oxyde d'étain dopé au fluor (SnO₂:F) ou une couche d'oxyde mixte d'étain et d'indium (ITO).

D'autres couches sont possibles, parmi lesquelles les couches minces à base d'oxydes mixtes d'indium et de zinc (appelées « IZO »), à base d'oxyde de zinc dopé au gallium ou à l'aluminium, à base d'oxyde de titane dopé au niobium, à base de stannate de cadmium ou de zinc, à base d'oxyde d'étain dopé à l'antimoine. Dans le cas de l'oxyde de zinc dopé à l'aluminium, le taux de dopage (c'est-à-dire le poids d'oxyde d'aluminium rapporté au poids total) est de préférence inférieur à 3%. Dans le cas du gallium, le taux de dopage peut être plus élevé, typiquement compris dans un domaine allant de 5 à 6%.

Dans le cas de l'ITO, le pourcentage atomique de Sn est de préférence compris dans un domaine allant de 5 à 70%, notamment de 10 à 60%. Pour les couches à base d'oxyde d'étain dopé au fluor, le pourcentage atomique de fluor est de préférence d'au plus 5%, généralement de 1 à 2%.

L'ITO est particulièrement préféré, notamment par rapport au SnO₂:F. De conductivité électrique plus élevée, son épaisseur peut être plus faible pour obtenir un même niveau d'émissivité. Aisément déposées par un procédé de pulvérisation cathodique, notamment assisté par champ magnétique, appelé « procédé magnétron », ces couches se distinguent par une plus faible rugosité, et donc un plus faible encrassement.

Un des avantages de l'oxyde d'étain dopé au fluor est en revanche sa facilité de dépôt par dépôt chimique en phase vapeur (CVD), qui contrairement au procédé de pulvérisation cathodique, ne nécessite pas de traitement thermique ultérieur, et peut être mis en oeuvre sur la ligne de production de verre plat par flottage.

Par « émissivité », on entend l'émissivité normale à 283 K au sens de la norme EN12898. L'épaisseur de la couche basse émissivité (TCO etc) est ajustée, en fonction de la nature de la couche, de manière à obtenir l'émissivité voulue, laquelle dépend des performances thermiques recherchées. L'émissivité de la couche basse émissivité est par exemple inférieure ou égale à 0,3, notamment à 0,25 ou même à 0,2. Pour des couches en ITO, l'épaisseur sera généralement d'au moins 40 nm, voire d'au moins 50 nm et même d'au moins 70 nm, et souvent d'au plus 150 nm ou d'au plus 200 nm. Pour des couches en oxyde d'étain dopé au fluor, l'épaisseur sera généralement d'au moins 120 nm, voire d'au moins 200 nm, et souvent d'au plus 500 nm.

Par exemple la couche basse émissivité comprend la séquence suivante :sous-couche haut indice/sous-couche bas indice/ une couche TCO/ surcouche diélectrique optionnelle.

Comme exemple préféré de couche basse émissivité (protégée durant une trempe, on peut choisir sous-couche haut indice (<40 nm) / sous-couche bas indice (<30 nm) / une couche ITO/ surcouche haut indice (5 - 15 nm))/ surcouche bas indice (<90 nm) barrière/ dernière couche (< 10 nm).

On peut citer comme couche basse émissivité celles décrites dans le brevet US2015/0146286, sur la face F4, notamment dans les exemples 1 à 3.

Dans une réalisation préférée :
- le premier et/ou le deuxième vitrage est teinté et/ou l'intercalaire de feuilletage est teinté sur tout en partie de son épaisseur
- et/ou l'une des faces F2 ou F3 ou F4 -de préférence la face F4 - du vitrage, est revêtue d'une couche basse émissivité, notamment comprenant une couche d'oxyde transparent électro-conducteur (dite TCO) notamment un empilement de couches minces avec couche TCO ou un empilement de couches minces avec couche(s) d'argent
- et/ou l'une des faces F2 ou F3 ou F4 -de préférence la face F3 - du vitrage, est revêtue d'une couche de contrôle solaire, notamment comprenant une couche d'oxyde transparent électro-conducteur (dite TCO) notamment un empilement de couches minces avec couche TCO ou un empilement de couches minces avec couche(s) d'argent
- et/ou un film additionnel (polymérique, comme un polyéthylène téraphtalate PET etc) teinté est entre les faces F2 et F3 ou (collé) en F4 voire en face F1.

En particulier, la face F4 du vitrage, est revêtue d'une couche fonctionnelle transparente notamment basse émissivité, de préférence comprenant une couche TCO,

L'invention concerne bien entendu tout véhicule notamment automobile comportant au moins un vitrage tel que décrit précédemment.

L'invention vise aussi à simplifier et/ou augmenter les cadences.

A cet effet l'invention a pour objet un procédé de fabrication comportant avant mise en place sur le premier vitrage (par exemple par collage via un film plastique de protection arrière par exemple sur la face F2 du vitrage monolithique ou F4 d'un vitrage feuilleté -ou par collage périphérique du dernier film optique ou de protection la face F2 du vitrage monolithique ou F4 d'un vitrage feuilleté -ou entre deux vitrages d'un vitrage feuilleté) le prémontage sur l'élément électroluminescent (OLED, OLED etc), sur la surface de sortie:
- de l'optique de collimation en film(s), et même de l'optique de redirection prismatique en film(s), notamment par fixation périphérique même par collage périphérique formant éventuellement un scellage, notamment par fixation périphérique même par collage périphérique formant éventuellement un scellage
- ou de l'optique de redirection holographique en film, notamment par fixation périphérique même par collage périphérique formant éventuellement un scellage
- et même éventuellement d'un film de protection éventuellement coloré sur le dernier film optique de redirection, notamment par fixation périphérique même par collage périphérique formant éventuellement un scellage.

On préfère pour tous une fixation et même collage périphérique formant éventuellement un scellage.

A cet effet, l'invention propose aussi un procédé de fabrication d'un vitrage feuilleté lumineux par exemple vitrage feuilleté tel que décrit précédemment qui comporte les étapes suivantes:
- positionnement de l'élément électroluminescent en particulier OLED (voire fixation notamment par collage de préférence transparent ou mise en contact adhésif par chauffage ponctuel etc) sur un feuillet intercalaire de feuilletage plein ou dans une ouverture borgne ou traversante et simultanément ou séparément positionnement de l'optique de collimation et de l'optique de redirection assymétrique ou de l'optique de redirection holographique en regard de l'élément électroluminescent et successivement :
- mise en place de l'ensemble positionné entre le premier et deuxième vitrage
- feuilletage avec mise sous vide et chauffage voire mise sous pression (et chauffage), par exemple autoclavage

On réalise ainsi des opérations hors ligne de feuilletage industrielle.

Le procédé peut comprendre ou prévoir en outre :
- le positionnement de l'élément électroluminescent en particulier OLED est sur ledit feuillet intercalaire de feuilletage dans une ouverture borgne ou traversante côté surface d'entrée, avec l'optique de redirection holographique ou avec l'optique de collimation voire même de l'optique de redirection assymétrique logée dans l'ouverture et fixée, et de préférence collée, en périphérie de la surface de sortie ou avec l'optique de redirection holographique ou asymétrique capotant l'ouverture et sur ledit feuillet intercalaire de feuilletagecapotant l'ouverture et sur ledit feuillet intercalaire de feuilletage
- avant ledit positionnement, la fixation notamment par collage d'un film de protection local sur la face avant finale de l'optique de redirection assymétrique ou holographique et lors dudit positionnement ledit intercalaire de feuilletage a un trou borgne logeant le film de protection local ou ledit intercalaire de feuilletage a un trou traversant et un autre intercalaire de feuilletage ferme le trou

ledit intercalaire de feuilletage ayant un trou traversant logeant l'élément électroluminescent en particulier OLED, et l'optique de collimation et l'optique de redirection assymétrique ou l'élément électroluminescent et l'optique de redirection holographique, le procédé comporte le placement d'un film de protection fermant le trou et d'un autre feuillet intercalaire couvrant le film de protection éventuellement déjà en contact adhésif avec le film de protection
la mise en contact adhésif ponctuel par chauffage et pression hors zone élément électroluminescent en particulier OLED
   - dudit feuillet intercalaire et d'un autre feuillet intercalaire dit arrière côté surface d'entrée
   - et/ou dudit feuillet intercalaire et un autre feuillet intercalaire dit avant côté surface de sortie,
      et/ou de l'optique de collimation et de l'optique de redirection assymétrique ou de l'optique de redirection holographique avec le feuillet intercalaire ou un autre feuillet intercalaire
      l'élément électroluminescent et même l'optique de collimation et l'optique de redirection assymétrique ou l'élément électroluminescent et l'optique de redirection holographique étant dans un trou borgne ou traversant d'un desdits feuillets intercalaire et/ou l'élément électroluminescent et même l'optique de collimation et l'optique de redirection assymétrique o l'élément électroluminescent et l'optique de redirection holographique étant en sandwich entre ledit feuillet intercalaire et l'autre feuillet intercalaire arrière ou avant.
   - ledit feuillet intercalaire (plein ou troué) est un feuillet PVB éventuellement acoustique ou est composite (préassemblé ou non) PVB/film plastique fonctionnel ou PVB/film plastique fonctionnel/PVB, le positionnement étant sur du PVB ou sur le film fonctionnel, de préférence le film fonctionnel est plein lors que le PVB est troué.

De préférence, avant le feuilletage, le trou borgne ou traversant est d'épaisseur Eₜ de 0,3 à 0,9mm avec en valeur absolue E1-Et d'au plus 0,3mm ou Ei- somme des épaisseurs OLED et optique(s) d'au plus 0,3mm.

On peut utiliser de préférence :
- un premier et seul feuillet avec un trou borgne, de préférence PVB éventuellement acoustique
- un premier feuillet (PVB) avec un trou borgne et traversant et un deuxième feuillet plein (PVB),
- un premier feuillet (PVB) avec un trou borgne et traversant entre un deuxième feuillet plein (PVB) et un troisième feuillet plein (PVB).

En particulier :
- le feuillet arrière côté F3 est du PVB d'épaisseur Eᵢ de 0,3 à 0,9mm éventuellement acoustique et/ou teinté
- et/ou le feuillet central avec trou borgne ou traversant est du PVB Eⱼ d'épaisseur de 0,3 à 0,9mm éventuellement acoustique et/ou teinté avec en valeur absolue E1-E2 d'au plus 0,3mm-
- et/ou le feuillet avant côté face F2 est du PVB Eₖ d'épaisseur de 0,3 à 0,9mm clair ou extraclair, éventuellement acoustique.

La mise en contact adhésif local permet que les éléments restent bien solidaires les uns des autres lors de la suite du procédé.

On prévoit éventuellement aussi mise en contact adhésif local de l'ensemble avec au moins l'un des premier et deuxième vitrages

Chaque contact adhésif est par exemple de largeur d'au plus 15mm

En particulier de manière avantageuse, la mise en contact adhésif local est par chauffage local de l'intercalaire de feuilletage (de 60° à 80°C pour le PVB) et mieux par pression.

Le chauffage local est notamment par induction, air chaud, élément chauffant, par rayonnement (laser etc).

Comme outil de chauffage (et mieux de pression) on peut utiliser une lampe « fer à souder » avec un embout plat (avec un film antiadhérent (silicone, PTFE élastomère etc) apte à laisser passer la chaleur, des doigts chauffants, un pistolet à air chaud.

On peut choisir un outil de chauffage qui permet d'effectuer les différents points adhésifs ponctuels en une seule opération.

Le film de protection local peut être :
- collé en périphérie de l'optique de redirection
- précollé sur la face arrière du PVB avant par mise en contact adhésif ponctuel par chauffage de préférence
- collé sur la face d'un PVB central avec une ouverture pour l'élément électroluminescent en particulier OLED et par mise en contact adhésif ponctuel par chauffage de préférence.

Le film de protection couvrant peut être :
- précollé sur la face arrière du PVB avant par mise en contact adhésif ponctuel par chauffage de préférence
- collé sur la face d'un PVB central avec une ouverture pour l'élément électroluminescent en particulier OLED par mise en contact adhésif ponctuel par chauffage de préférence

Le procédé peut comprendre la fourniture d'un feuillet dit central de PVB ou d'un feuillet composite PVB/ film plastique fonctionnel tel que PET portant un éventuel revêtement fonctionnel ou PVB/ film plastique fonctionnel tel que PET portant un éventuel revêtement fonctionnel /PVB, avec une ouverture traversante logeant avant le feuilletage l'élément électroluminescent en particulier OLED et éventuellement l'optique de collimation collé sur la surface de sortie en périphérie-Le procédé peut comprendre la mise en contact adhésif local entre le feuillet central et le feuillet arrière ou avant et/ou l'élément électroluminescent en particulier OLED.

De manière classique le feuilletage comporte dégazage, et parfois autoclavage qui implique la mise en oeuvre de températures et pressions appropriées de manière habituelle, lors de l'autoclave. le feuillet tel que le PVB est amené à relativement haute température (supérieure à 100°C pour le PVB), ce qui va le ramollir et lui permettra de fluer. En cas d'utilisation de plusieurs feuillets notamment PVB, un phénomène remarquable se produit alors, les interfaces les différents PVB vont disparaitre, le PVB va en quelque sorte se cicatriser pour ne former en fin d'autoclave qu'un film homogène et continu.

On réalise le feuilletage qui peut influer sur la largeur de l'ouverture éventuelle, par fluage de l'intercalaire. Par fluage, l'intercalaire de feuilletage (premier feuillet, feuille ou feuillet composite) avec l'ouverture plus large que l'élément électroluminescent et même que l'optique de collimation.

Chaque feuillet est de préférence dimensionné pour couvrir au moins 80% ou 90% de la face F2, et il pourrait dépasser de la face F2.

Chaque feuillet est de préférence PVB.

La présente invention est à présent expliquée plus en détail en référence aux figures annexées dans lesquelles :

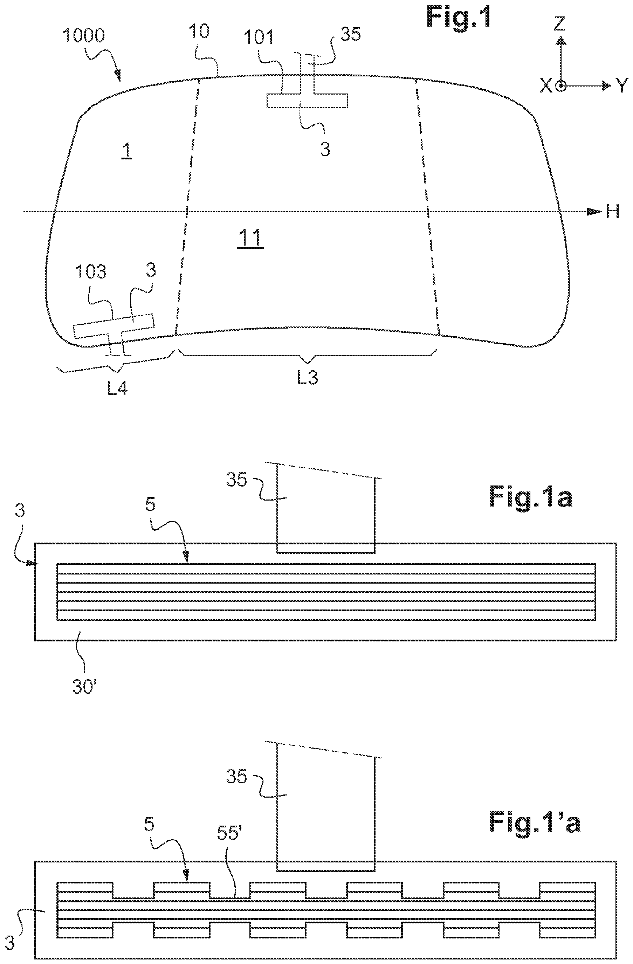

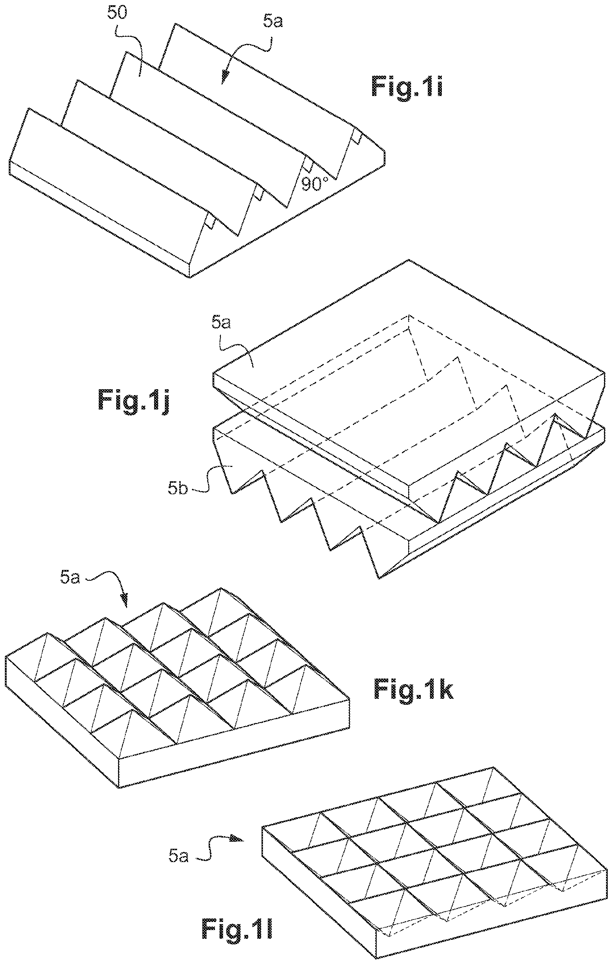

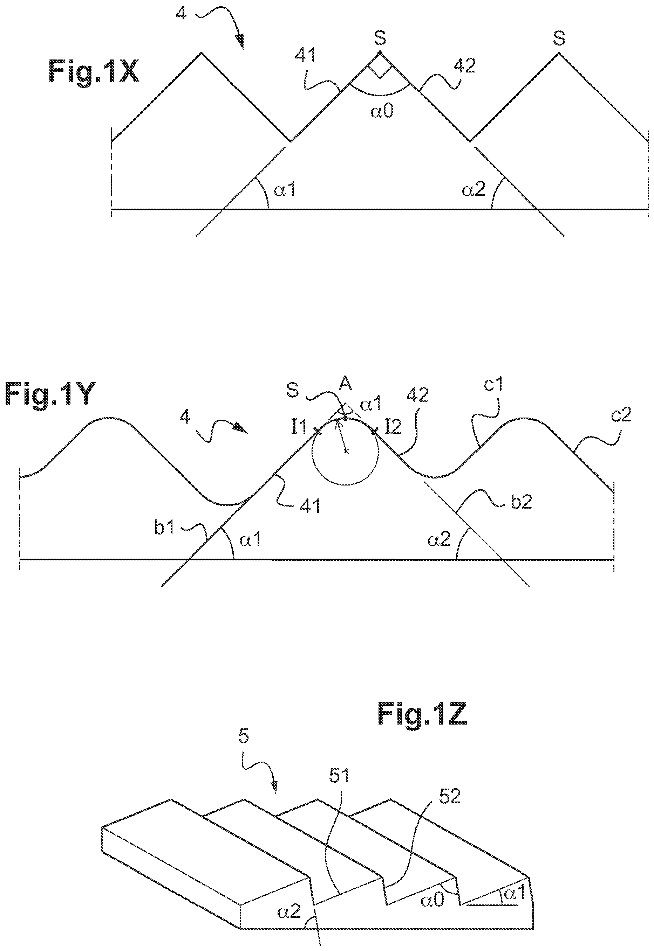

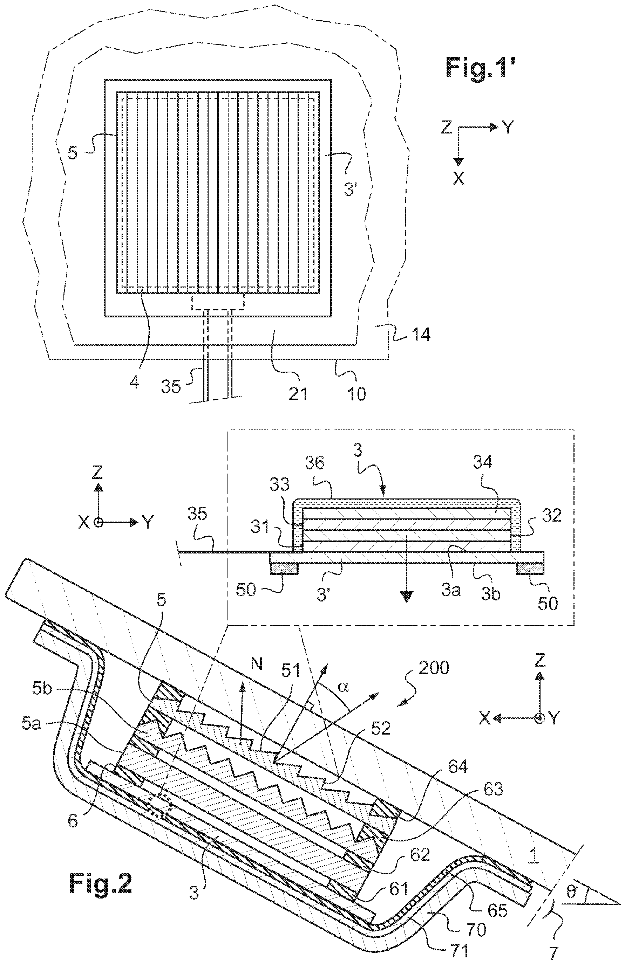

La figure 1 est une vue de face coté F1 d'une lunette avec l'OLED à lumière collimatée et redirigée selon l'invention.
La figure 1a est une vue de détail de face de l'OLED munie de son optique de collimation et celle de redirection.
La figure 1'a est une vue alternative de détail de face côté extérieur de OLED munie de son optique de collimation et celle de redirection.
La figure 1' est une vue de détail de face côté extérieur de l'OLED avec l'optique de collimation et de redirection.
La figure 1i est une vue d'ensemble d'une optique de collimation.
La figure 1j est une vue d'ensemble d'une optique de collimation.
La figure 1k est une vue d'ensemble d'une optique de collimation.
La figure 1l est une vue d'ensemble d'une optique de collimation.
La figure 1X est une vue d'ensemble d'une optique de collimation.
La figure 1Y est une vue d'ensemble d'une optique de collimation.
La figure 1Z est une vue de face d'une optique de collimation.
La figure 2 est une vue de coupe d'une vitre arrière (lunette) selon un second mode de réalisation.
La figure 3a est une vue de face d'un déflecteur (vitre fixe latérale) avec OLED à lumière collimatée et redirigée selon l'invention.
La figure 3b est une vue de coupe d'un déflecteur (vitre fixe latérale) avec OLED à lumière collimatée et redirigée selon l'invention.
La figure 3c est une vue de détail de face de OLED munie de son optique de collimation et celle de redirection.
La figure 3d est une vue alternative de détail de face d'OLED munie de son optique de collimation et celle de redirection.
La figure 4a est une vue de coupe d'un vitrage 400a (lunette ou déflecteur) à lumière collimatée et redirigée selon l'invention.
La figure 4b est une vue de coupe d'un vitrage 400b (lunette ou déflecteur) à lumière collimatée et redirigée selon l'invention.
La figure 4c est une vue de coupe d'un vitrage (lunette ou déflecteur) à lumière collimatée et redirigée selon l'invention.
La figure 4d est une vue de coupe d'un vitrage (lunette ou déflecteur) à lumière collimatée et redirigée selon l'invention.
La figure 4e est une vue de coupe d'un vitrage (lunette ou déflecteur) à lumière collimatée et redirigée selon l'invention.
La figure 5 est une vue de coupe d'un vitrage avec l'OLED à lumière collimatée et redirigée selon l'invention.
La figure 6a est une vue de coupe d'un vitrage (lunette ou déflecteur) avec l'OLED à lumière collimatée et redirigée selon l'invention.
La figure 6b est une vue de coupe d'un vitrage selon l'invention avec l'OLED à lumière collimatée et redirigée selon l'invention.
La figure 7a est une vue montrant une étape de montage hors feuilletage de l'OLED avec l'optique de collimation et de redirection sur un premier feuillet PVB intercalaire de feuilletage dans le but de réaliser le vitrage selon l'invention.
La figure 7b est une vue montrant une étape de montage hors feuilletage de l'OLED avec l'optique de collimation et de redirection sur un premier feuillet PVB intercalaire de feuilletage dans le but de réaliser le vitrage selon l'invention.
La figure 7c est une vue montrant une étape de montage hors feuilletage de l'OLED avec l'optique de collimation et de redirection sur un premier feuillet PVB intercalaire de feuilletage dans le but de réaliser le vitrage selon l'invention.
La figure 7d est une vue montrant une étape de montage hors feuilletage de l'OLED avec l'optique de collimation et de redirection sur un premier feuillet PVB intercalaire de feuilletage dans le but de réaliser le vitrage selon l'invention.
La figure 7e est une vue montrant une étape de montage hors feuilletage de l'OLED avec l'optique de collimation et de redirection sur un premier feuillet PVB intercalaire de feuilletage dans le but de réaliser le vitrage selon l'invention.
La figure 7f est une vue montrant une étape de montage hors feuilletage de l'OLED avec l'optique de collimation et de redirection sur un premier feuillet PVB intercalaire de feuilletage dans le but de réaliser le vitrage selon l'invention.
La figure 7g est une vue montrant une étape de montage hors feuilletage de l'OLED avec l'optique de collimation et de redirection sur un premier feuillet PVB intercalaire de feuilletage dans le but de réaliser le vitrage selon l'invention.

Les figures ne sont pas à l'échelle et sont schématiques.

L'ensemble des figures décrivent comme source de lumière un OLED mais on peut choisir en variante OLED ou TFEL. L'ensemble des figures décrivent une optique de collimation et une optique de redirection suivant les lois de l'optique géométrique. Cumulativement ou alternativement au changement de source, on peut substituer à l'optique de reidrection assymétrique (et à l'optique de collimation) une optique de redirection holographique. L'angle de déviation va dépendre du pas et de la longueur d'onde de la lumière.

La figure 1 est une vue de face coté extérieur d'une lunette arrière 1000 avec deux exemples OLED à lumière collimatée redirigée selon l'invention donc en direction de la face F1 extérieure 11 de la première feuille de verre par exemple monolithique 1.

Sont représentés :
- une première OLED 3 ou série d'OLED à lumière collimatée redirigée par des optiques 5 (collimation et par dessus celle de redirection 5 vers le sol) le long du bord supérieur et centré en une bande rectangulaire rouge auto pour former un 3eme feu stop 101 (zone L3)
- une deuxième OLED 3 ou série d'OLED à lumière collimatée redirigée par des optiques 5 (collimation et redirection 5 vers le sol) le long du bord inférieur et décentré en une bande rectangulaire jaune auto pour former un répétiteur de clignotant 103 (zone L4).

Les OLEDs sont alimentées par un connecteur 35 dépassant du bord du verre et en option ce dernier est masqué de l'extérieur par une couche périphérique de masquage notamment en émail noir (non montrée) en face F2.Les OLEDS en variante peuvent former un pictogramme.

La figure 1a est une vue de détail de face de l'OLED 3 (une ou plusieurs OLED accolées ou disjointes par exemple chacune rectangulaire) munie coté surface de sortie 30' de son optique de collimation en un réseau de prismes s'étendant suivant l'horizontale H surmontée de celle de redirection 5 en un réseau de prismes assymétriques s'étendant suivant l'horizontale H.

On préfère des films optiques transparents et minces par exemple chacun de forme rectangulaires, notamment empilement de deux ou trois films ou plus.

La figure 1'a est une vue alternative de détail de face de plusieurs OLED 3 accolées (par exemple chacune carrée ou rectangulaire) munie de leurs optiques de collimation et de redirection 5. Entre les OLEDs les optiques (parties non fonctionnelles 55') peuvent être de largeur réduite ou même à égale à zéro ou sans texturation. On préfère également pour chaque optique un ou des films optiques transparents et minces par exemple de forme rectangulaire (largeur constante ou réduite entre les OLEDs comme déjà dit), notamment empilement de deux ou trois films ou plus.

La figure 1i est une vue d'ensemble d'une optique de collimation selon l'invention. La figure 1X est une vue de coupe de l'optique de collimation avec des sommets S en pointes et les angles représentatifs des prismes angle au sommet, angle avec plan du film optique prismatique).

L'optique de collimation 5a, est ici un film optique prismatique qui va être par exemple fixé en périphérie par un adhésif double face ou une colle à la surface de sortie (générant une lame d'air en entrée) de l'OLED. Il s'agit par exemple d'un film plastique exemple de moins de 0,3mm et en PET partiellement texturé en épaisseur. Il comporte en face avant un réseau de prismes 50 de préférence jointifs et même symétriques avec des sommets S et avec un pas T entre sommets qui est de 10µm à 500µm s'étendant longitudinalement suivant un axe formant un angle d'au plus 10° avec la direction de référence (ici l'horizontale pour la lunette ou en variante un parebrise) et même parallèle.

Chaque prisme est défini par deux faces longitudinales 41,42 chaque prisme présente un angle au sommet allant de 60 à 110°, mieux de 90° et chaque face longitudinale forme avec le plan du film optique 4 un angle allant de 30 à 55° mieux de 45°.

Par exemple le pas est de 160 µm et la hauteur de 80µm et l'épaisseur restante est de 175µm avec angle au sommet et coté vallée de 90° (+-20 arc).

De l'air est entre la surface de sortie de l'OLED et la face d'entrée de ce film optique unique 5a de l'optique de collimation.

De l'air est entre les prismes de la face avant de l'optique de collimation, les sommets des motifs de chaque face avant sont en contact physique avec la face F2.

La figure 1' est une vue de détail de face côté extérieur de l'OLED avec l'optique de collimation et de redirection 5 collé en périphérie par exemple en regard des bords techniques (sur le support 3') de l'OLED 3. L'axe longitudinal des prismes est l'horizontal entre les côtés de la lunette (ou du parebrise).

Le collage peut être en cadre et former un scellement.

La figure 1Y est une vue d'ensemble d'une autre optique de collimation 4 selon l'invention. Cette figure se différencie de la figure 1X en ce que les sommets sont arrondis et les faces latérales courbes, on définit les angles représentatifs des prismes (angle au sommet, angle avec plan du film) à partir des deux droites sécantes b1, b2 en A passant par les points d'inflexion I1,I2. On limite aussi le rayon de courbure.

La figure 1j est une vue d'ensemble d'une optique de collimation selon l'invention.

Cette figure se différencie de la 1i en ce que pour former l'optique de collimation on rajoute un deuxième film prismatique 5b identique et croisé à 90° et par exemple collé (soudé etc) en périphérie au premier film prismatique 5a.

La figure 1k est une vue d'ensemble d'une optique de collimation.

Cette figure se différencie de la précédente en ce que l'optique de collimation 4 (toujours un film plastique texturé partiellement en épaisseur par exemple en PET et de moins de 0,6 mm) porte des motifs bidimensionnels.

Chaque motif bidimensionnel étant défini par un flanc e dans un plan P normal au film 5a le motif bidimensionnel présente un angle au sommet allant de 60 à 110°, chaque intersection du flanc avec le plan P formant avec le plan du film un angle allant de 30 à 55°. De préférence on choisit angle au sommet (dans le plan P) de 90° et les 2 autres angles de 45°.

Les motifs bidimensionnels sont ici en reliefs, les sommets des motifs de chaque face avant sont libres ou en contact physique avec un élément transparent (face F2 du vitrage extérieur par exemple), de l'air est entre les motifs bidimensionnels.

La figure 1I est une vue d'ensemble d'une optique de collimation selon l'invention

Cette figure se différencie de la figure précédente en ce qu'ici les motifs bidimensionnels sont en creux, le réseau de motifs bidimensionnels est un réseau de cavités, les sommets S sont orientés (vers l'intérieur de l'habitacle (vers la face F3 d'un vitrage feuilleté) et la surface haute de chaque cavité est libre ou en contact physique avec un élément transparent (deuxième vitrage etc), de l'air est dans les cavités.

Une fois la lumière collimatée il faut la rediriger vers le sol pour la lunette (ou vers l'arrière pour une vitre arrière etc).

La figure 1Z est une vue de face d'une optique de redirection qui sera sur la face avant de l'optique de collimation (fixée en périphérie, par exemple collée ou soudée ou espacée d'au plus 1mm). C' est un film optique de redirection comportant un réseau de prismes assymétriques avec des sommets et avec un pas T' entre sommets qui est de 10µm à 500µm, de préférence avec au moins 4 ou même 10 motifs en regard de la surface de sortie (ou émettrice de lumière),

L'optique de redirection comporte ainsi un premier film optique 5 qui est prismatique assymétrique avec sur une face principale opposée à la surface de sortie dite face avant finale, ledit réseau de prismes assymétriques s'étendant longitudinalement suivant un troisième axe formant un angle d'au plus 10°, au plus 5° ou au plus 2° avec ledit premier axe et même parallèle et/ou avec la direction de référence du vitrage (l'horizontale pour la lunette) et même est parallèle, notamment avec une épaisseur submillimétrique .

Chaque prisme assymétrique est défini par des première et deuxième faces longitudinales, le prisme ayant de préférence une longueur L et une largeur W avec L>2W et mieux L>5W ou L>10W .

Chaque prisme assymétrique présente un angle au sommet a'0 allant de 50 à 60° mieux 55°±5°, 55°±2° et la première face longitudinale 51 (dit grand côté) forme avec le plan du film un premier angle, allant de 31 à 41° mieux de 35°±5°, 35°±2° (naturellement la deuxième face longitudinale (dit petit côté) 52 forme avec le plan du film un deuxième angle, allant de 79 à 99° mieux de 85 à 90°, 88 à 90° de préférence d'au plus 90°. De préférence la différence a4-a3 est supérieure à 40° et même à 50°. En variante on choisit même un ensemble de deux films optiques parallèles qui sont prismatiques assymétriques.

La figure 2 est une vue de coupe d'une vitre arrière (lunette) monolithique avec OLED à lumière collimatée redirigée selon l'invention selon un mode de réalisation. Cette lunette 200 comprend un premier vitrage transparent 1 en verre minéral ou organique, avec des faces principales 11, 12 dite faces F1 et F2, et une tranche (0, et une direction dite de référence qui est l'horizontale au plan du vitrage (bombé ou non).

L'OLED 3 émet du rouge auto vers la face F2 et a une surface émettrice de longueur d'au moins 5cm et de largeur d'au moins 1cm, et est de préférence d'épaisseur E0 submillimétrique, avec un demi angle d'émission au sommet de 50°à 70° et une direction d'émission principale normale au plan dudit OLED.

Sur la surface de sortie de l'OLED est fixé par collage périphérique 61 un premier film optique 5a avec ledit réseau des prismes s'étendant longitudinalement suivant un premier axe.

Sur la face avant de ce premier film est fixé par collage périphérique 62 un deuxième film optique 5b avec le deuxième réseau des prismes s'étendant longitudinalement suivant un deuxième axe formant un angle avec ledit premier axe de 90°, le premier ou le deuxième axe forme avec la direction de référence un angle nul.

Sur la face avant de ce deuxième film est fixé par collage périphérique 63, un premier film optique de redirection 5 avec réseau des prismes assymétriques avec un grand côté 51 et un petit côté 52 s'étendant longitudinalement suivant la direction de référence

La normale N au grand côté dirigée vers la face F2 est orientée vers le haut de la vitre arrière ou du parebrise (pour une redirection vers le sol).

La face avant de ce film de redirection est fixée par collage périphérique 64 (colle, double face etc) à la face F2 (ou F4 si feuilleté) ce qui est optionnel car ici un film arrière de protection 7 (ici bicouche 70,71 couvre et déborde l'ensemble OLED et optique 5a, 5b,5 film avec colle 65. Par exemple ce film 7,70 est teinté (en masse) ou porteur d'une couche fonctionnelle 71 électroconductrice (contrôle solaire etc) sur l'une de ses faces principales.

La lunette est par exemple orientée entre 12° et 80° du sol et par exemple de 50 à 70°.

Le film par exemple rabat d'un angle d'au moins 15° vers le sol la lumière.

L'OLED 3 comporte un connecteur 35 dépassant de la tranche du premier vitrage ici fixé côté surface d'entrée en périphérie

L'OLED 3 est à émission par l'arrière comportant un support 3', qui porte côté opposé à la face F2 dans cet ordre en s'éloignant du support : une sous couche fonctionnelle éventuelle 31, une anode transparente 32, un système électroluminescent organique 33, une cathode réfléchissante 34 et une couche (résine ) d'encapsulation 36.

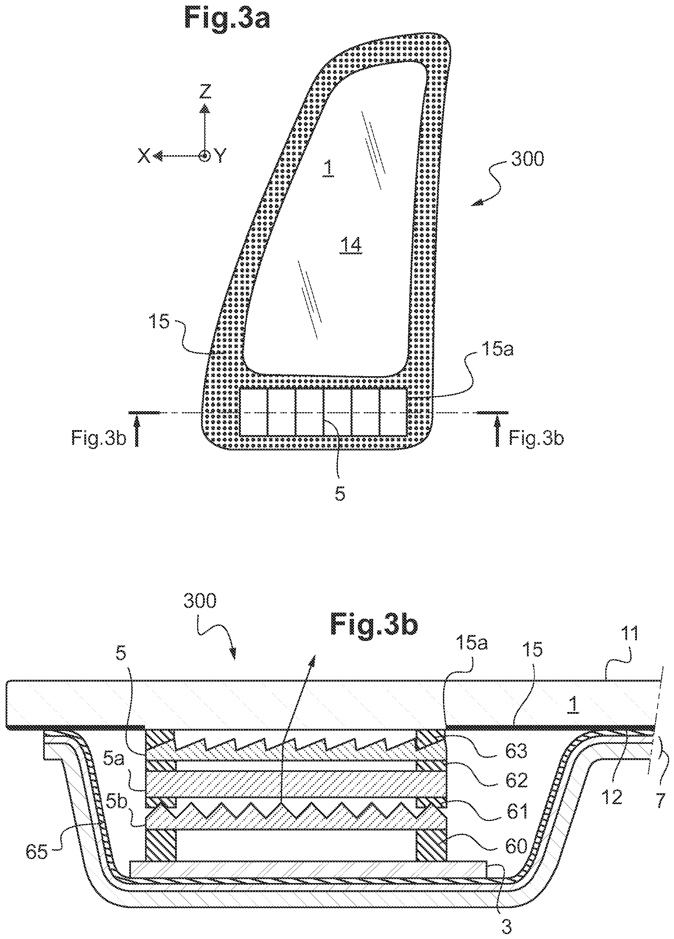

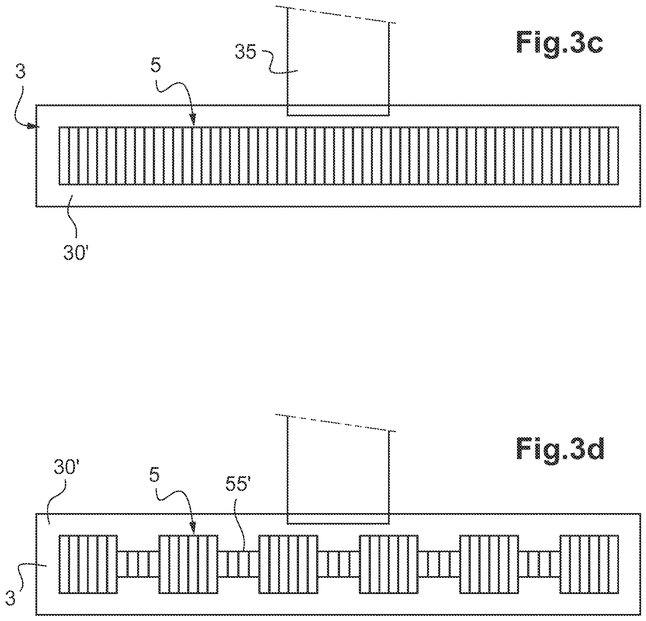

La figure 3a est une vue de face d'un déflecteur 300 (vitre fixe latérale) monolithique avec OLED à lumière collimatée redirigée selon l'invention. La figure 3b est une vue de coupe du déflecteur (vitre fixe latérale) avec OLED à lumière collimatée redirigée selon l'invention.

Ce déflecteur comprend un premier vitrage transparent 1 en verre minéral ou organique, avec des faces principales 11, 12 dite faces F1 et F2, et une tranche 10, et une direction dite de référence qui est la normale à l'horizontale au plan du vitrage (bombé ou non). Il est par exemple en forme de quadrilatère avec bord supérieur de largeur réduite. Il comporte une couche de masquage 15 (émail noir etc) par exemple en face F2 et muni d'une épargne 15a.

L'OLED 3 est en regard de l'épargne 15a et côté intérieur et émet du jaune auto vers la face F2 et a une surface émettrice de longueur d'au moins 5cm et de largeur d'au moins 1cm, et est de préférence d'épaisseur E0 submillimétrique, avec un demi angle d'émission au sommet de 50°à 70° et une direction d'émission principale normale au plan dudit OLED.

Par exemple il s'agit d'une bande lumineuse rectangulaire (ou toute autre forme) en bordure inférieure.

Sur la surface de sortie de l'OLED est fixé par collage périphérique 60 un premier film optique 5a avec ledit réseau des prismes s'étendant longitudinalement suivant un premier axe (cf figure 3b).

Sur la face avant de ce premier film est fixé par collage périphérique 61 un deuxième film optique 5b avec le deuxième réseau des prismes s'étendant longitudinalement suivant un deuxième axe formant un angle avec ledit premier axe de 90°, le premier ou le deuxième axe forme avec la direction de référence un angle nul.

Sur la face avant de ce deuxième film est fixé par collage périphérique 62, un premier film optique de redirection 5 avec réseau des prismes assymétriques avec un grand côté 51 et un petit côté 52 s'étendant longitudinalement suivant la direction de référence.

La normale N au grand côté dirigée vers la face F2 est orientée vers l'avant du déflecteur (pour une redirection vers l'arrière.

La face avant de ce film de redirection est fixée par collage périphérique 64 à la face F2 ce qui est optionnel car ici un film arrière de protection 7 (ici bicouche 70,71 couvre et déborde l'ensemble OLED et optique 5a, 5b,5 film avec colle 65. Par exemple il est teinté ou porteur d'une couche fonctionnelle 71 électroconducitrice (contrôle solaire etc)

La lunette est par exemple orientée entre 12° et 80° du sol et par exemple de 50 à 70°.

Le film par exemple rabat d'un angle d'au moins 15° vers le sol la lumière.

L'OLED 3 comporte un connecteur 35 dépassant de la tranche du premier vitrage ici fixé côté surface d'entrée en périphérie.

En variante, il s'agit d'une vitre feuilletée avec collage en face F4. L'émail peut être en face F2 et en F3 ou F4 (chacun avec une réserve).

En relation avec la réalisation de la figure 3a, la figure 3c est une vue de détail de face de l'OLED 3 munie de son optique de collimation en un réseau de prismes s'étendant suivant l'horizontale H et celle de redirection 5 en un réseau de prismes assymétriques s'étendant suivant la verticale coté surface de sortie 30'.

On préfère des films optiques transparents et minces, notamment empilement de deux ou trois films ou plus..

En relation avec la réalisation de la figure 3a, la figure 3b est une vue alternative de détail de face de plusieurs OLED 3 accolées munie de leurs optiques de collimation et de redirection 5 entre les oleds les optiques (non fonctionnels) peuvent être de largeur réduite ou même à égale à zéro ou sans texturation.

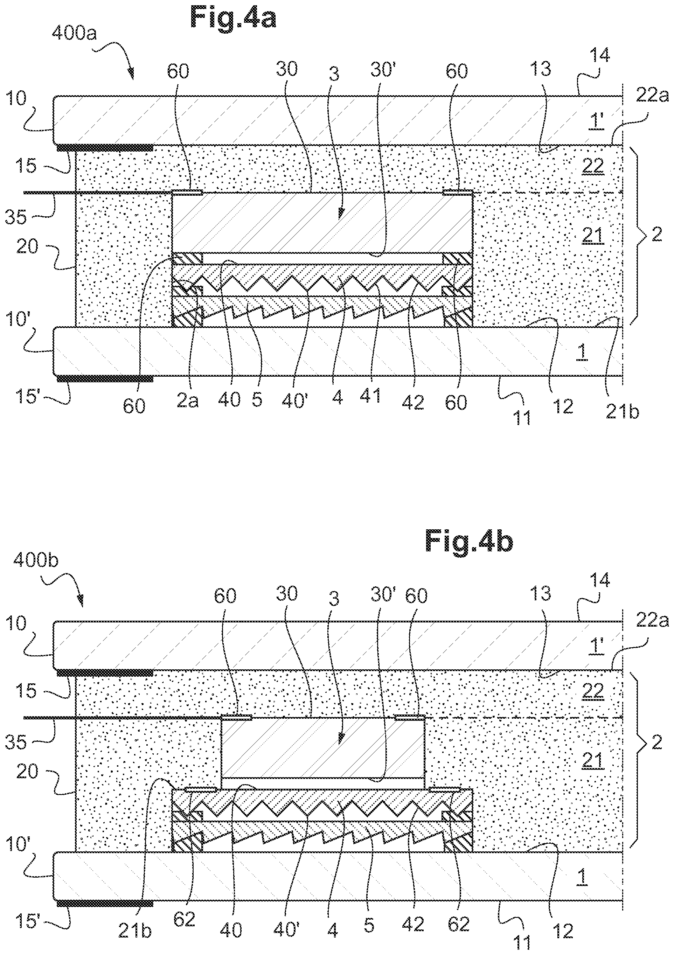

La figure 4a est une vue de coupe d'un vitrage 400a (lunette ou déflecteur ou pare-brise) à lumière collimatée et redirigée selon l'invention.

La lunette feuilleté de véhicule notamment automobile 400a comprenant :
- un premier vitrage transparent 1, en verre minéral voire organique, formant vitrage extérieur, avec des faces principales 11, 12 dite faces F1 et F2, une tranche 10, et une direction dite de référence qui est l'horizontale entre les bords latéraux de la lunette
- un deuxième vitrage 1', formant vitrage intérieur par exemple en verre TSA (ou clair ou extraclair) et notamment de 2,1mm d'épaisseur ou même de 1,6mm ou encore de moins de 1,1mm (verre trempé chimiquement notamment), avec des troisième et quatrième faces principales 13, 14 respectivement dites face F3 et face F4,
- entre la face F2 et la face F3 formant les faces internes 12, 13 du vitrage feuilleté un intercalaire de feuilletage 2,21,22 en matière polymérique, ici en PVB, d'épaisseur d'au plus 2mm ou submillimétrique de préférence de 1mm ou moins, par exemple de 0,76mm pour un PVB classique (RC41 de Solutia ou d'Eastman) en variante si nécessaire un PVB acoustique (tricouche ou quadricouche) par exemple d'épaisseur 0,81mm environ, comportant une couche de PVB 21 avec une face FB en contact adhésif avec la face F2 (nue ou revêtue) et une ouvertures débouchante 2a sur la face F2, tranche 20 du PVB en retrait par exemple de 2mm de la tranche des vitrages,
- une éventuelle couche fonctionnelle par exemple de basse émissivité en face F4 (ITO etc) et/ou alternativement la face F3 est éventuellement revêtue d'une couche fonctionnelle (chauffante, basse émissivité etc)
- de préférence des couches périphériques de masquages interne et externe 15',15 en face F1 11 ou F3 ou de préférence en face F2 12 et même en F4 14, par exemple en émail noir.

Dans l'ouverture débouchante est logé un élément électroluminescent qui est un OLED 3, (ou OLED ou un TFEL) et apte à émettre de la lumière rouge auto pour former un feu stop ou autre feu (ou jaune auto pour répétiteur de clignotant) ou sert pour une signalétique externe (pictogramme etc) vers la face F2 12, OLED ayant une surface de sortie 30 vers la face F2 et une surface d'entrée 30 opposé dans le fond de l'ouverture 2a. L'OLED comporte un connecteur 35 dépassant de la tranche du premier vitrage ici fixé côté surface d'entrée en périphérie. L'OLED est à émission par l'arrière par exemple.

En regard de l'OLED 3 est placée dans cet ordre:
- une optique de collimation 4, ayant une face arrière 40 côté surface de sortie OLED et une face avant 40' opposée à la face arrière
- une optique de redirection 5 ayant une face arrière côté surface de sortie et une face avant opposée à la face arrière.

En variante en regard de l'OLED 3 est placée une optique de redirection holographique ayant une face arrière côté surface de sortie et une face avant opposée à la face arrière.

L'ouverture débouchante 2a entoure l'OLED 4 les optiques 4,5 et même en contact de sa tranche ou en variante espacé d'au plus 0,5mm et même d'au plus 0,1mm de la tranche.

Lors de la fabrication on choisit par exemple un premier feuillet 21, en PVB, avec une ouverture traversante (ou borgne en variante) et un deuxième feuillet arrière de PVB 22 côté face arrière 30. Par fluage les deux feuillets sont accolés avec ou non une interface discernable (ici en pointillés). Si nécessaire, l'OLED 3 est préfixée sur le feuillet arrière 22 par collage 60 ou par mise en contact adhésif ponctuel par chauffage ponctuel (et pression). Les deux feuillets 21, 22 peuvent être mise en contact adhésif ponctuel hors zone de l'OLED 3 avant ou après la mise en place entre les deux vitrages 1, 1'.

L'optique de collimation 4, est ici un film optique prismatique ou de préférence à motifs bidimensionnels (surtout si unique) fixé en périphérie par un adhésif double face ou une colle 60 à la surface de sortie (générant une lame d'air en entrée). Il s'agit par exemple d'un film plastique partiellement texturé en épaisseur par exemple de moins de 0,3mm et en PET. Par exemple le pas est de 160µm et la hauteur de 80µm et l'épaisseur restante est de 175µm avec angle au sommet et coté vallée de 90° (+-20 arc). De l'air est entre la surface de sortie et la face d'entrée de ce premier film optique unique de l'optique de collimation. De l'air est entre les motifs (prismes etc) de la face avant de l'optique de collimation 4, les sommets des motifs sont en contact physique avec l'optique de redirection 5.

L'optique de redirection 5 est ici un film optique prismatique assymétrique contre ou de préférence comme ici fixé en périphérie par un adhésif double face ou une colle 60 à la face avant de l'optique 4 (générant une lame d'air en entrée de l'optique de redirection 5) et de préférence contre ou comme ici fixé en périphérie par un adhésif double face ou une colle 60 à la face F2 (générant une lame d'air en sortie). De l'air est entre les prismes de la face avant de l'optique de redirection, les sommets des motifs sont éventuellement en contact physique avec la face F2 12. L'empilement des deux films 4, 5 peut être très mince.

La figure 4b est une vue de coupe d'un vitrage 400b (lunette ou déflecteur ou parebrise) à lumière collimatée et redirigée selon l'invention.

Cette figure se différencie de la figure 4a en ce que l'optique de collimation 4 et celle de redirection 5 sont plus larges que l'OLED 3 et que l'ouverture débouchante (que l'ouverture traversante du deuxième feuillet 21) et est ici fixée (ou contre) sur la face du PVB 21 par collage 62 ou avant feuilletage par mise en contact adhésif ponctuel par chauffage ponctuel (et pression).

L'optique de redirection 5, est ici un film optique prismatique assymétrique contre ou de préférence comme ici fixé en périphérie par un adhésif double face ou une colle 60 à la face avant de l'optique 4 (générant une lame d'air en entrée) et de préférence contre ou comme ici fixé en périphérie par un adhésif double face ou une colle 60 à la face F2 12. De l'air est entre les prismes de la face avant de l'optique de redirection, les sommets des motifs sont éventuellement en contact physique avec la face F2.

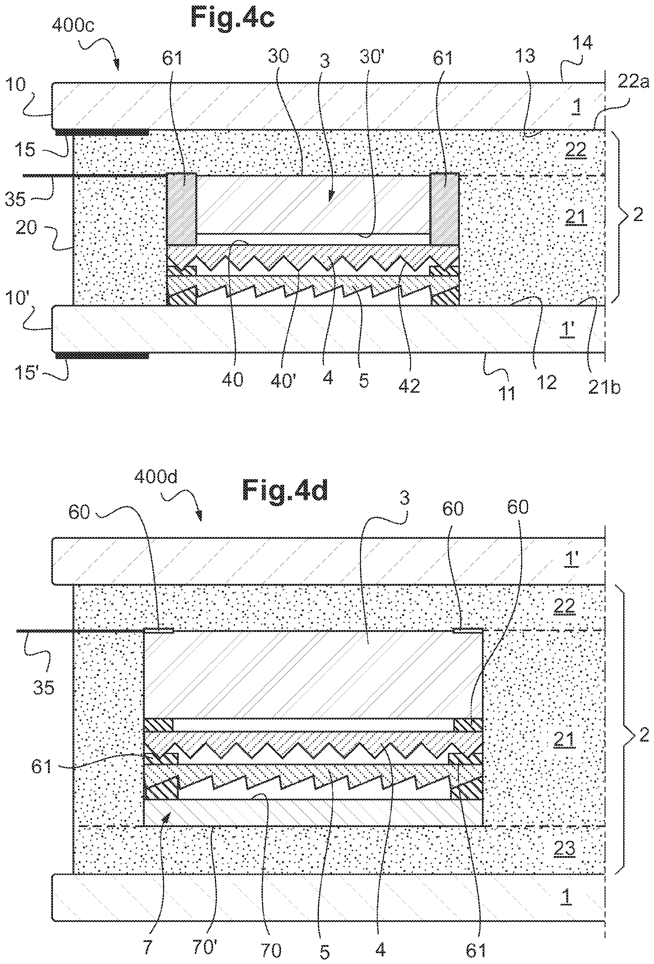

La figure 4c est une vue de coupe d'un vitrage 400c (lunette ou déflecteur ou parebrise) à lumière collimatée et redirigée selon l'invention.

Cette figure se différencie de la précédente en ce que l'optique de collimation 4 et l'optique de redirection 5, toujours dans l'ouverture débouchante, sont plus larges que l'OLED 3 et l'optique de collimation 4 est collée par colle 61 au PVB 22 (face avant du feuillet PVB arrière 22) avec ou sans aide d'espaceur.

L'optique de redirection 5, est contre ou comme ici fixé en périphérie par un adhésif double face ou une colle 60 à la face F2 12.

La figure 4d est une vue de coupe d'un vitrage 400d (lunette ou déflecteur ou parebrise) à lumière collimatée et redirigée selon l'invention.

Cette figure se différencie de la figure 4a en ce que l'ouverture dans le PVB est interne. Par exemple lors de la fabrication on a placé un feuillet PVB avant 23 sur le feuillet 21 avec ouverture (devenu feuillet central).

Pour éviter le fluage lors du feuilletage qui supprimerait la fonction optique de l'optique de redirection 5 un film de protection plastique 7 local par exemple de moins de 0,3mm et en PET est collé en périphérie de la face avant du film optique prismatique de redirection 5.

Ce film 7 peut être un filtre coloré (OLED blanche et filtre rouge ou jaune etc).

L'optique de redirection 5, est ici un film optique prismatique assymétrique contre ou comme ici fixé en périphérie par un adhésif double face ou une colle 60 au film de protection plastique 7.

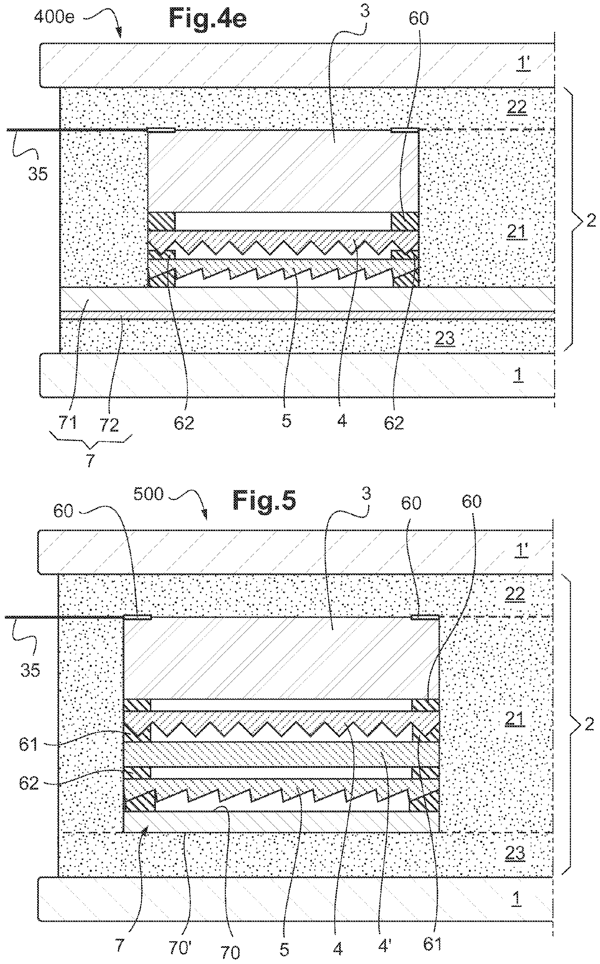

La figure 4e est une vue de coupe d'un vitrage 400e (lunette ou déflecteur ou parebrise) à lumière collimatée et redirigée selon l'invention.

Cette figure se différencie de la précédente en ce que le film de protection plastique 7 est un film couvrant par exemple de moins de 0,3mm et en PET qui est collé en périphérie de la face avant du film optique prismatique 5 de redirection et/ou simplement recouvre (ferme) l'ouverture débouchante. Il est en contact adhésif avec le PVB avant 23 par exemple préassemblé avec (PET fonctionnel/PVB avant ensemble avant feuilletage) et avec le PVB 21 (hors zone ouverture).

Ce film 7,71 peut être teinté et/ou avoir un revêtement fonctionnel électroconducteur 72 côté face F2 ou F3 : contrôle solaire , low E,etc.

L'optique de redirection 5, est ici un film optique prismatique assymétrique contre ou comme ici fixé en périphérie par un adhésif double face ou une colle 60 au film de protection plastique 7.

La figure 5 est une vue de coupe d'un vitrage 500 (lunette ou déflecteur ou parebrise) avec OLED à lumière collimatée redirigée selon l'invention.

Cette figure se différencie de la figure 4d en ce qu'on rajoute un deuxième film prismatique 4' identique croisé à 90° et collé (soudé etc) en périphérie 61 au premier film prismatique et au film de redirection 5.

L'optique de redirection 5, est ici un film optique prismatique assymétrique contre ou comme ici fixé en périphérie par un adhésif double face ou une colle 60 au film de protection plastique 7.

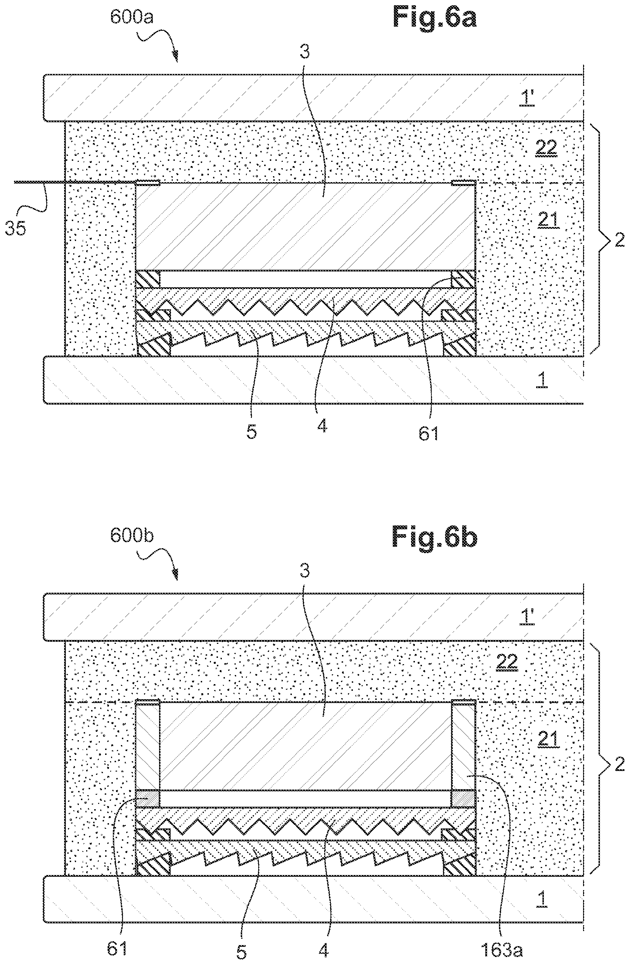

La figure 6a est une vue de coupe d'un vitrage 600a (lunette ou déflecteur ou parebrise) avec OLED à lumière collimatée redirigée selon l'invention.

Cette figure se différencie de la figure 4a en ce que l'optique de collimation 4 (toujours un film plastique texturé par exemple en PET et de moins de 0,6 mm) porte des motifs bidimensionnels.

Chaque motif bidimensionnel étant défini par un flanc et, dans un plan P normal au film le motif bidimensionnel présente un angle au sommet allant de 60 à 110°, chaque intersection du flanc avec le plan P formant avec le plan du film un angle allant de 30 à 55°. De préférence on choisit angle au sommet (dans le plan P) de 90° et les autres angles de 45°.

L'optique de redirection 5, est ici un film optique prismatique assymétrique contre ou comme ici fixé en périphérie par un adhésif double face ou une colle 60 à la face F2.

La figure 6b est une vue de coupe d'un vitrage 600b avec OLED à lumière collimatée redirigée selon l'invention.

Cette figure se différencie de la figure 6a en ce que l'optique de collimation 4 est collée sur un cadre espaceur 163a entourant l'OLED 3 par exemple contre ou collé au PVB arrière 22.

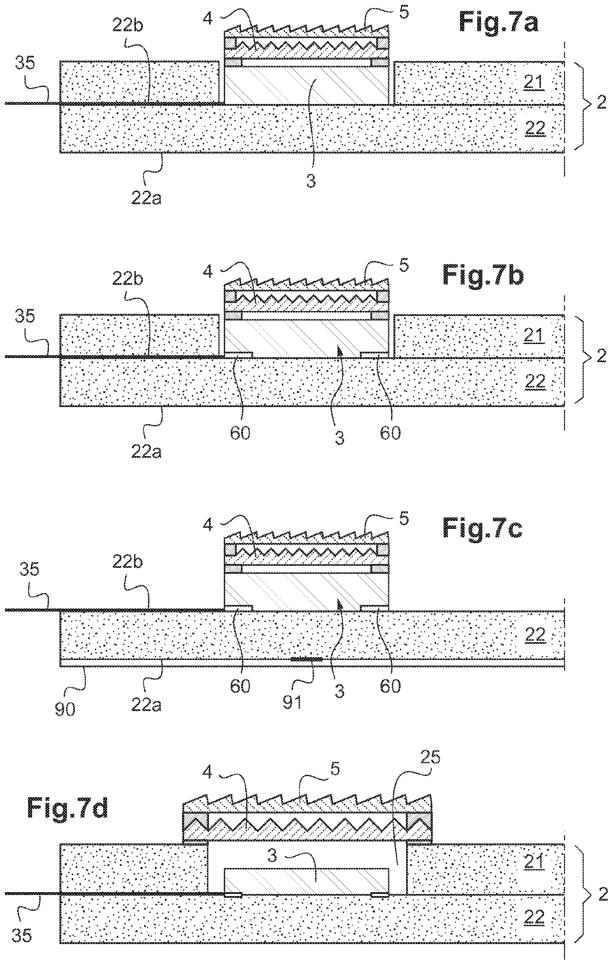

La figure 7a est une vue montrant une étape de montage hors feuilletage de l'OLED 3 avec l'optique de collimation 4 et celle de redirection 5 sur un premier feuillet PVB intercalaire de feuilletage 22 dans le but de réaliser le vitrage de véhicule selon l'invention.

L'optique de collimation (un film prismatique ou deux films croisés ou à motifs 2D) est prémontée sur l'OLED 3 par collage périphérique ainsi que l'optique de redirection 5 sur l'optique de collimation.

On utilise un deuxième feuillet 21 avec une ouverture traversante logeant l'ensemble avec le connecteur 35 dépassant (coté surface d'entrée de l'OLED 3). On place le tout sur le feuillet arrière 22 (face 22b) avec éventuel mise en contact adhésif local par chauffage et/ou pression rouleau) entre PVB 21 et PVB 22 hors zone OLED ou entre OLED et PVB 22 et /ou entre le connecteur et les PVBs 21, 22.

En variante on place d'abord le feuillet troué et on le soulève pour placer l'ensemble OLED et optiques dans la ou les zones repérées.

Si on rajoute un troisième feuillet PVB coté surface de sortie (PVB avant) il faut utiliser un film de protection local ou couvrant entre l'optique de redirection et la face arrière de ce feuillet PVB avant. Par exemple on ajoute un film plastique mince transparent (et même coloré et OLED blanche) et même à couche fonctionnelle.

La figure 7b est une vue montrant une étape de montage hors feuilletage de l'OLED avec l'optique de collimation et de redirection sur un premier feuillet PVB intercalaire de feuilletage dans le but de réaliser le vitrage selon l'invention.

Cette figure se différencie de la précédente en ce que l'on fixe par collage 60 la surface arrière de l'OLED sur le feuillet arrière 22.

Si on rajoute un troisième feuillet PVB coté surface de sortie (PVB avant) il faut utiliser un film de protection local ou couvrant entre l'optique de redirection 5 et la face arrière de ce feuillet PVB avant. Par exemple on ajoute un film plastique mince transparent et même à couche fonctionnelle.

La figure 7c est une vue montrant une étape de montage hors feuilletage de l'OLED avec l'optique de collimation et de redirection sur un premier feuillet PVB intercalaire de feuilletage dans le but de réaliser le vitrage selon l'invention.

Cette figure se différencie de la précédente en ce qu'on n'utilise pas (encore) de deuxième feuillet avec ouverture traversante ou borgne.

On prévoit un aide au positionnement de l'OLED par un film 90 avec un repère 91 soit antiadhérent contre la face 22a soit à l'opposé de la table transparente (verre) de feuilletage.

Si on rajoute un troisième feuillet PVB coté surface de sortie (PVB avant) il faut utiliser un film de protection local ou couvrant entre l'optique de redirection 5 et la face arrière de ce feuillet PVB avant. Par exemple c'est un film plastique mince transparent et même à couche fonctionnelle.

La figure 7d est une vue montrant une étape de montage hors feuilletage de l'OLED avec l'optique de collimation et de redirection sur un premier feuillet PVB intercalaire de feuilletage dans le but de réaliser le vitrage selon l'invention.

Cette figure se différencie de la figure 7a en ce que l'optique de collimation 4 et celle de redirection 5 sont plus larges que le trou traversant 25 du PVB 21 et l'optique de collimation 4 est fixée contre la face avant du feuillet PVB troué 21 par collage ou en variante par mise en contact adhésif (chauffage et/ou pression). L'optique 4 referme le trou et est espacé de l'OLED 3.

Si on rajoute un troisième feuillet PVB coté surface de sorite (PVB avant) il faut utiliser un film de protection local ou couvrant entre l'optique de redirection et la face arrière de ce feuillet PVB avant. Par exemple c'est un film plastique mince transparent et même à couche fonctionnelle.

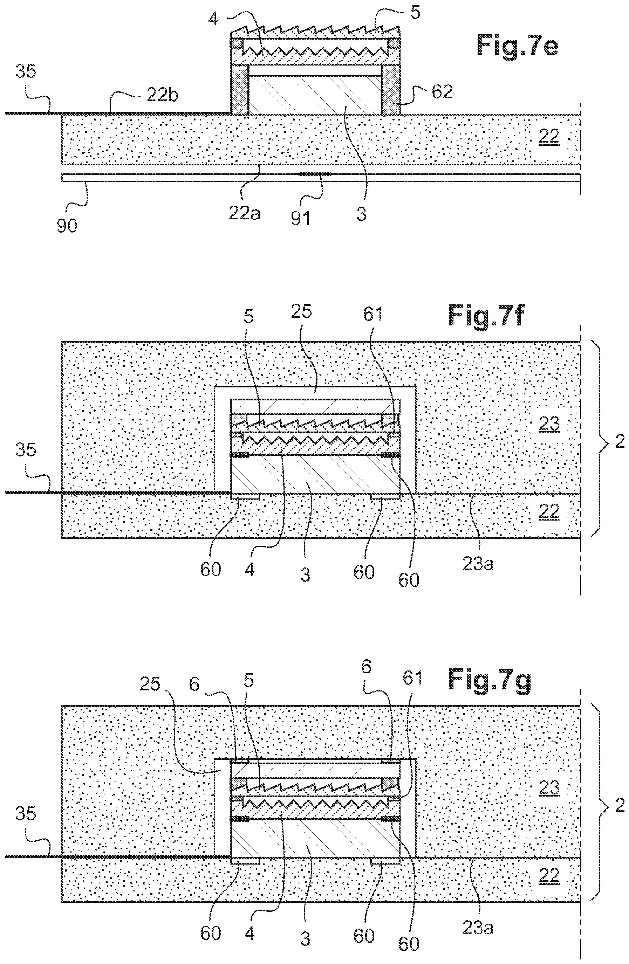

La figure 7e est une vue montrant une étape de montage hors feuilletage de l'OLED avec l'optique de collimation et de redirection sur un premier feuillet PVB intercalaire de feuilletage dans le but de réaliser le vitrage selon l'invention.

Cette figure se différencie de la figure 7c en ce que l'optique de collimation 4 plus large que l'OLED est fixée contre la face avant du feuillet arrière 22 par collage 52 avec ou sans espaceur.

Si on rajoute un troisième feuillet PVB coté surface de sortie (PVB avant) il faut utiliser un film de protection local ou couvrant entre l'optique de redirection 5et la face arrière de ce feuillet PVB avant. Par exemple c'est un film plastique mince transparent et même à couche fonctionnelle.

La figure 7f est une vue montrant une étape de montage hors feuilletage de l'OLED avec l'optique de collimation et de redirection sur un premier feuillet PVB intercalaire de feuilletage dans le but de réaliser le vitrage selon l'invention.

Cette figure se différencie de la figure 7b en ce que le deuxième feuillet PVB 23 comprend une ouverture borgne 25 on protège du fond l'optique de redirection 5 par un film plastique de protection local dans l'ouverture.

La figure 7g est une vue montrant une étape de montage hors feuilletage de l'OLED avec l'optique de collimation et de redirection sur un premier feuillet PVB intercalaire de feuilletage dans le but de réaliser le vitrage selon l'invention.

Cette figure se différencie de la figure 7f en ce que le film de protection est collé au fond par collage ou mise en contact adhésif local (chauffage et/ou pression).

## Revendications

1. Vitrage de véhicule à signalisation lumineuse externe, choisi parmi une vitre latérale, une vitre arrière ou un parebrise, notamment automobile (100) comprenant :
- un premier vitrage transparent (1), en verre minéral ou organique, avec des faces principales (11, 12) dite faces F1 et F2, et une tranche (10), et une direction dite de référence
- une source de lumière (3) côté face F2 et apte à émettre de la lumière de signalisation externe, source de lumière ayant une surface de sortie vers la face F2 **caractérisé en ce que** la source de lumière est un élément électroluminescent qui a une surface émettrice de longueur d'au moins 5cm et de largeur d'au moins 1cm, et est de préférence d'épaisseur E0 submillimétrique, avec un demi angle d'émission au sommet de 50°à 70° et une direction d'émission principale normale au plan dudit élément électroluminescent
**en ce que** dans une configuration, il comprend en regard dudit élément électroluminescent, entre la face F2 et ledit élément électroluminescent, une optique de collimation (5a, 5b), ayant une face arrière côté surface de sortie et une face avant dite de collimation opposée à la face arrière
l'optique de collimation, en matière transparente, est de préférence d'épaisseur submillimétrique, comporte un film optique ou un ensemble de films optiques chacun comportant sur une face avant opposée à la surface de sortie un réseau de motifs avec des sommets et avec un pas T entre sommets qui est de 10µm à 500µm, l'optique de collimation comporte :
a) un premier film optique, avec ledit réseau de motifs qui sont bidimensionnels,
b) ou un ensemble d'au moins deux films optiques qui sont prismatiques, de préférence d'au plus deux films optiques prismatiques, comportant dans cet ordre en s'éloignant de la surface de sortie :
- un premier film optique avec ledit réseau de motifs qui sont des prismes s'étendant longitudinalement suivant un premier axe ,
- et en regard du premier film optique, un deuxième film optique avec le deuxième réseau de motifs qui sont des prismes s'étendant longitudinalement suivant un deuxième axe formant un angle avec ledit premier axe de 90±10°, le premier ou le deuxième axe forme avec la direction de référence un angle d'au plus 10° et même est parallèle
c) ou un premier film optique unique avec ledit réseau de motifs qui sont des prismes, le réseau de prismes s'étendant longitudinalement suivant un axe qui formant un angle d'au plus 10°avec la direction de référence et même est parallèle
**en ce que** pour a) chaque motif bidimensionnel étant défini par un flanc et, dans un plan P normal au film le motif bidimensionnel présente un angle au sommet allant de 60 à 110°, chaque intersection du flanc avec le plan P formant avec le plan du film optique un angle allant de 30 à 55°,
**en ce que** pour b) et c) chaque prisme étant défini par deux faces longitudinales chaque prisme présente un angle au sommet allant de 60 à 110°, et chaque face longitudinale forme un angle allant de 30 à 55° avec le plan de film optique prismatique
**en ce que** pour qu'il comprend en regard de l'optique de collimation, une optique de redirection (5), entre l'optique de collimation et la face F2, en matière transparente, comporte un film optique de redirection ou un ensemble de films optiques de redirection chacun comportant sur une face principale avant opposée à la surface de sortie un réseau de prismes assymétriques avec des sommets et avec un pas T' entre sommets qui est de 10µm à 500µm, l'optique de redirection comporte ainsi:
i) un premier film optique assymétrique avec l'ensemble des prismes assymétriques s'étendant longitudinalement suivant un troisième axe formant un angle d'au plus 10° avec la direction de référence et même est parallèle
j) ou un ensemble de deux films optiques assymétriques qui sont prismatiques, comportant dans cet ordre en s'éloignant de la surface de sortie:
- un premier film optique assymétrique avec l'ensemble des prismes assymétriques s'étendant longitudinalement suivant un troisième axe formant un angle d'au plus 10° avec la direction de référence
- et en regard du premier film optique assymétrique, un deuxième film optique assymétrique avec le deuxième réseau de motifs prismatiques, l'ensemble des prismes du deuxième réseau s'étendant longitudinalement suivant un quatrième axe formant un angle avec ledit troisième axe d'au plus 10° et/ou le quatrième axe forme un angle avec la direction de référence du vitrage d'au plus 10°
**en ce que** pour i) ou j) chaque prisme assymétrique étant défini par des première et deuxième faces longitudinales, chaque prisme présente un angle au sommet allant de 50 à 60°, et une première face longitudinale, dite grand côté, forme avec le plan du film optique assymétrique un angle allant de 31° à 41°
**en ce que** :
- la direction de référence pour la vitre arrière ou le parebrise est l'horizontale dans le plan de la vitre arrière ou du parebrise
- et la direction de référence pour la vitre latérale est la normale à l'horizontale dans le plan de la vitre latérale
- la normale au grand côté dirigée vers la face F2 est orientée vers le haut de la vitre arrière ou du pare brise ou vers l'avant de la vitre latérale
et **en ce que**
- de l'air est entre la surface de sortie et la face d'entrée du premier film optique de l'optique de collimation,
- pour b) et c) de l'air est entre les prismes de la face avant de l'optique de collimation,
- pour a) les motifs bidimensionnels sont en creux, le réseau de motifs bidimensionnels est un réseau de cavités, les sommets S sont orientés à l'opposé de la face F2 et la surface haute de chaque cavité est espacée ou en contact physique avec le film prismatique assymétrique, de l'air est dans les cavités, ou les motifs bidimensionnels sont en reliefs, les sommets des motifs bidimensionnels de chaque face avant sont espacées ou en contact physique avec le film prismatique assymétrique, de l'air est entre les motifs bidimensionnels
- de l'air est entre les prismes asymétriques, la face avant finale du film prismatique assymétrique est espacée ou en contact physique avec un élément transparent distinct ou correspondant au premier vitrage
ou **en ce que** dans une configuration alternative, le vitrage comporte en regard de la surface de sortie une optique de redirection holographique, notamment en matière transparente, l'optique de redirection holographique comporte une face avant vers la face F2 et une face arrière opposée, l'optique de redirection holographique comporte un film avec un réseau de motifs holographiques sur la face avant, et de l'air est entre la surface de sortie et la face d'entrée de l'optique de redirection holographique et l'air est entre les motifs holographiques en reliefs de la face avant de l'optique de redirection holographique ou l'air est dans les motifs holographiques en creux de la face avant de l'optique de redirection holographique, la face avant du film de redirection holographique est espacée ou en contact physique avec un élément transparent distinct ou correspondant au premier vitrage.

2. Vitrage de véhicule à signalisation lumineuse externe selon la revendication précédente **caractérisé en ce que**:
- pour la vitre arrière la source de lumière émet de préférence dans le rouge, notamment l'ensemble source de lumière et optique de collimation et optique de redirection assymétrique formant un (troisième) feu stop ou l'ensemble source de lumière et optique de redirection holographique formant un (troisième) feu stop
- ou pour la vitre arrière ou le parebrise, la source de lumière émet de préférence dans le jaune, notamment l'ensemble source de lumière et optique de collimation et optique de redirection assymétrique formant un clignotant, par exemple en forme d'une flèche ou l'ensemble source de lumière et optique de redirection holographique formant un clignotant, par exemple en forme d'une flèche
- et/ou pour la vitre arrière ou le parebrise la source de lumière est un pictogramme en particulier alerte comme triangle de secours ou information sur distance de sécurité

3. Vitrage de véhicule à signalisation lumineuse externe selon l'une des revendications précédentes **caractérisé en ce qu'**il comporte une pluralité d' élément électroluminescents en particulier OLED ou de TFEL ou de QLED chacun avec l'optique de redirection holographique ou avec l'ensemble optique de collimation et optique de redirection assymétrique notamment sources de lumières en bordure supérieure de la vitre arrière.

4. Vitrage de véhicule à signalisation lumineuse externe selon la revendication 1 ou 3 **caractérisé en ce que** pour la vitre latérale, notamment fixe, comme un déflecteur, la source de lumière émet dans le jaune, en particulier l'ensemble source de lumière et optique de collimation et optique de redirection assymétrique formant un répétiteur de clignotant ou l'ensemble source de lumière et optique de redirection holographique formant un répétiteur de clignotant.

5. Vitrage de véhicule à signalisation lumineuse externe selon l'une des revendications précédentes **caractérisé en ce que** les prismes ou les motifs bidimensionnels et de préférence les prismes assymétriques sont jointifs ou essentiellement jointifs.

6. Vitrage de véhicule à signalisation lumineuse externe selon l'une des revendications précédentes **caractérisé en ce que** le ou chaque film optique est un film plastique partiellement texturé dans son épaisseur.

7. Vitrage de véhicule à signalisation lumineuse externe selon l'une des revendications précédentes **caractérisé en ce que** l'élément électroluminescent est une diode électroluminescente organique dit OLED notamment transparente (TOLED) ou une diode électroluminescente à point quantique dit QLED.

8. Vitrage de véhicule à signalisation lumineuse externe selon l'une des revendications précédentes **caractérisé en ce que**, en particulier pour l'OLED, il comprend un filtre coloré, notamment un film plastique d'épaisseur submillimétrique, qui est :
- entre la surface de sortie et la face arrière de l'optique de collimation notamment premier film optique
ou
- entre la surface de sortie et la face d'entrée de l'optique de redirection holographique notamment film optique
ou
- entre l'optique de redirection et un intercalaire de feuilletage, filtre formant alors film de protection.

9. Vitrage de véhicule à signalisation lumineuse externe selon l'une des revendications précédentes **caractérisé en ce que** l'élément électroluminescent est l'OLED qui est à émission par l'arrière comportant un support, qui porte côté opposé à la face F2 dans cet ordre en s'éloignant du support : une sous couche fonctionnelle éventuelle, une anode transparente, un système électroluminescent organique, une cathode réfléchissante.

10. Vitrage de véhicule à signalisation lumineuse externe selon l'une des revendications précédentes **caractérisé en ce que** le premier vitrage est bombé, l'élément électroluminescent, notamment OLED ou QLED, est flexible.

11. Vitrage de véhicule à signalisation lumineuse externe selon l'une des revendications précédentes **caractérisé en ce qu'**il comporte un élément de connexion électrique dudit élément électroluminescent lié audit élément électroluminescent et dépassant de la tranche du premier vitrage.

12. Vitrage de véhicule à signalisation lumineuse externe selon l'une des revendications précédentes **caractérisé en ce que** l'optique de collimation est fixée à l'élément électroluminescent en périphérie de la surface de sortie, fixée via sa face arrière, de préférence par un adhésif notamment transparent, et même de la face émettrice, et **en ce que** l'optique de redirection assymétrique est fixée en périphérie de la face avant finale à l'optique de collimation notamment par un adhésif de préférence transparent ou **en ce que** l'optique de redirection holographique est fixée à l'élément électroluminescent en périphérie de la surface de sortie, fixée via sa face arrière, de préférence par un adhésif notamment transparent, et même de la face émettrice.

13. Vitrage de véhicule à signalisation lumineuse externe selon l'une des revendications précédentes **caractérisé en ce qu'**il comporte un vitrage feuilleté comportant :
- ledit premier vitrage transparent (1),
- un deuxième vitrage transparent (1') en verre minéral ou organique, avec des faces principales (13, 14) dites faces F3 et F4,
- entre les faces F2 et F3 qui sont les faces internes du vitrage feuilleté, un intercalaire de feuilletage transparent, éventuellement teinté et/ou éventuellement composite dans son épaisseur, en matière polymérique (2, 20), film intercalaire de feuilletage ayant une face principale FA côté face F3 et une face principale FB côté face F2, face FA qui est en contact adhésif avec la face F3 et face FB en contact adhésif avec la face F2, l'élément électroluminescent étant entre les faces F2 ou F3 et de préférence l'optique de collimation et l'optique de redirection assymétrique entre les faces F2 ou F3 ou l'optique de redirection assymétrique holographique est entre les faces F2 ou F3 ou l'élément électroluminescent sur la face F4 et de préférence l'optique de redirection assymétrique holographique est coté face F4 ou de préférence l'optique de collimation et l'optique de redirection assymétrique sont côté face F4.

14. Vitrage de véhicule à signalisation lumineuse externe selon l'une des revendications précédentes **caractérisé en ce que** l'optique de redirection assymétrique ou éventuellement holographique est contre ou fixée à l'élément transparent en périphérie de la face avant finale par exemple à la face F2 ou la face F4 d'un vitrage feuilleté comportant un deuxième vitrage transparent (1') en verre minéral ou organique, avec des faces principales (13, 14) dites faces F3 et F4, notamment fixé par un adhésif de préférence transparent.

15. Vitrage de véhicule à signalisation lumineuse externe selon l'une des revendications 1 à 12 **caractérisé en ce qu'**il comporte un vitrage feuilleté comportant :
- ledit premier vitrage transparent (1),
- un deuxième vitrage transparent (1') en verre minéral ou organique, avec des faces principales (13, 14) dites faces F3 et F4,
- entre les faces F2 et F3 qui sont les faces internes du vitrage feuilleté, un intercalaire de feuilletage transparent, de préférence en PVB, éventuellement teinté et/ou éventuellement composite dans son épaisseur, en matière polymérique (2), film intercalaire de feuilletage ayant une face principale FA côté face F3 et une face principale FB côté face F2, face FA qui est en contact adhésif avec la face F3 et face FB qui est en contact adhésif avec la face F2, l'optique de collimation est plus large que l'élément électroluminescent et est fixée en périphérie de préférence collée par un adhésif notamment transparent ou en périphérie est en contact adhésif via sa face arrière audit intercalaire de feuilletage et éventuellement l'optique de redirection assymétrique est plus large que l'élément électroluminescent et est fixée en périphérie de préférence collée par un adhésif notamment transparent via sa face arrière à l'optique de collimation
- ou l'optique de collimation est fixée en périphérie de préférence collée par un adhésif notamment transparent à la surface de sortie et l'optique de redirection assymétrique est plus large que l'élément électroluminescent et est fixée en périphérie de préférence collée par un adhésif notamment transparent audit intercalaire de feuilletage ou est en périphérie en contact adhésif via sa face arrière audit intercalaire de feuilletage
ou l'optique de redirection holographique est plus large que l'élément électroluminescent et est fixée en périphérie de préférence collée par un adhésif notamment transparent audit intercalaire de feuilletage ou est en périphérie en contact adhésif via sa face arrière audit intercalaire de feuilletage.

16. Vitrage de véhicule à signalisation lumineuse externe selon l'une des revendications 1 à 15 **caractérisé en ce que** la face F2 est libre, le vitrage est monolithique, l'optique de redirection holographique ou assymétrique est sur la face F2 ou si le vitrage est feuilleté et l'élément électroluminescent est du côté de la face F4 libre :
l'optique de redirection éventuellement holographique est fixée en périphérie de préférence collée, à l'élément électroluminescent, via sa face arrière, notamment par un adhésif de préférence transparent en périphérie de la surface de sortie ou l'optique de collimation est fixée en périphérie de préférence collée, à l'élément électroluminescent, via sa face arrière, notamment par un adhésif de préférence transparent en périphérie de la surface de sortie
et/ou **en ce que** l'ensemble élément électroluminescent / optique de collimation / optique de redirection assymétrique ou l'ensemble élément électroluminescent / optique de redirection holographique est fixé, de préférence collé, à la face libre F4 ou F2 via un film arrière de protection qui est sur la surface d'entrée dudit élément électroluminescent avec une partie dépassante de fixation sur la face libre F4 ou F2.

17. Vitrage de véhicule à signalisation lumineuse externe selon la revendication 13 **caractérisé en ce que** l'optique de direction holographique ou l'optique de collimation et de préférence l'optique de direction est entre la face F2 et F3, l'élément électroluminescent est entre la face F2 et F3 et dans la zone avec l'élément électroluminescent la face FA en contact adhésif avec la face F3 ou avec du côté de la surface de sortie, et la face FB en contact adhésif avec la face F2 et l'élément transparent est un film de protection plastique, sur la face avant finale, avec une face orientée vers la face F2 et en contact adhésif avec l'intercalaire de feuilletage, film de protection plastique étant local éventuellement avec une zone dite extension dépassant des bords de la face avant finale d'au plus 10cm.

18. Vitrage de véhicule à signalisation lumineuse externe selon l'une des revendications 14 à 18 **caractérisé en ce que** l'intercalaire de feuilletage est composite et comporte l'empilement suivant hors de zone de l'élément électroluminescent : PVB/film plastique fonctionnel avec un éventuel revêtement fonctionnel électroconducteur côté face F2 ou F3 /PVB, le film plastique fonctionnel s'étendant sur la face F2, et **en ce que** l'élément électroluminescent est entre la face F2 et F3, entre la face avant et la face F3 est présent ledit film plastique/ledit PVB, l'élément transparent est le film plastique fonctionnel sur la face avant.

19. Vitrage de véhicule à signalisation lumineuse externe selon l'une des revendications 12 à 18 **caractérisé en ce que** l'intercalaire de feuilletage comporte un PVB acoustique et/ou est teinté l'intercalaire de feuilletage notamment est un PVB au moins partiellement teinté dans son épaisseur, la partie teintée étant au moins entre l'élément électroluminescent est la face F3.

20. Vitrage de véhicule à signalisation lumineuse externe selon l'une des revendications 13 à 19 **caractérisé en ce que** l'élément électroluminescent est logé dans une ouverture de l'intercalaire de feuilletage et de préférence l'optique de collimation et l'optique de redirection est logée dans ladite ouverture ou l'optique de direction holographique est logée dans ladite ouverture, l'ouverture est borgne avec un fond en direction de la face F3 et débouchante sur la face F2, ou l'ouverture dite interne est dans l'épaisseur de l'intercalaire de feuilletage et ledit élément transparent est un film de protection logé dans ladite ouverture interne ou plus large que ladite ouverture interne et couvrant ladite ouverture interne.

21. Véhicule comportant au moins un vitrage lumineux selon l'une quelconque des revendications précédentes.

22. Procédé de fabrication de vitrage de véhicule à signalisation lumineuse externe selon l'une des revendications précédentes de vitrage **caractérisé en ce qu'**il comporte avant mise en place sur le premier vitrage, le prémontage sur l'élément électroluminescent, notamment la surface de sortie :
- de l'optique de collimation en film(s), notamment par fixation périphérique même par collage périphérique formant éventuellement un scellage, et même de l'optique de redirection assymétrique en film(s), notamment par fixation périphérique même par collage périphérique formant éventuellement un scellage
- ou de l'optique de redirection holographique en film, notamment par fixation périphérique même par collage périphérique formant éventuellement un scellage
- et même éventuellement d'un film de protection éventuellement coloré sur le dernier film optique de redirection, notamment par fixation périphérique même par collage périphérique formant éventuellement un scellage.

23. Procédé de fabrication de vitrage feuilleté de véhicule à signalisation lumineuse externe selon l'une des revendications 13 à 20 **caractérisé en ce qu'**il comporte les étapes suivantes:
- positionnement de l'élément électroluminescent sur un feuillet intercalaire de feuilletage plein ou dans une ouverture borgne ou traversante et simultanément ou séparément positionnement de l'optique de collimation et de l'optique de redirection assymétrique ou de l'optique de redirection holographique en regard de l'élément électroluminescent
et successivement :
- mise en place de l'ensemble positionné entre le premier et deuxième vitrage
- feuilletage avec mise sous vide et chauffage voire mise sous pression.

24. Procédé de fabrication de vitrage feuilleté de véhicule à signalisation lumineuse externe selon la revendication précédente de procédé **caractérisé en ce que** le positionnement de l'élément électroluminescent est sur ledit feuillet intercalaire de feuilletage dans une ouverture borgne ou traversante côté surface d'entrée, avec l'optique de redirection holographique ou avec l'optique de collimation voire même de l'optique de redirection assymétrique logée dans l'ouverture et fixée, et de préférence collée, en périphérie de la surface de sortie ou avec l'optique de redirection holographique ou asymétrique capotant l'ouverture et sur ledit feuillet intercalaire de feuilletage.

25. Procédé de fabrication de vitrage feuilleté de véhicule à signalisation lumineuse externe selon l'une des revendications précédentes de procédé **caractérisé en ce qu'**il comporte avant ledit positionnement, la fixation notamment par collage périphérique d'un film de protection local, éventuellement coloré, sur la face avant finale de l'optique de redirection assymétrique ou holographique et lors dudit positionnement ledit intercalaire de feuilletage a un trou borgne logeant le film de protection local ou ledit intercalaire de feuilletage a un trou traversant et un autre intercalaire de feuilletage ferme le trou.

26. Procédé de fabrication de vitrage feuilleté de véhicule à signalisation lumineuse externe selon l'une des revendications précédentes de procédé **caractérisé en ce que** ledit intercalaire de feuilletage ayant un trou traversant logeant l'élément électroluminescent, et l'optique de collimation et l'optique de redirection assymétrique ou l'élément électroluminescent et l'optique de redirection holographique, le procédé comporte le placement d'un film de protection fermant le trou, éventuellement coloré, et d'un autre feuillet intercalaire couvrant le film de protection éventuellement autre feuillet déjà en contact adhésif avec le film de protection local ou couvrant.

27. Procédé de fabrication de vitrage feuilleté de véhicule à signalisation lumineuse externe selon l'une des revendications précédentes de procédé **caractérisé en ce qu'**il comprend la mise en contact adhésif ponctuel par chauffage et pression hors zone élément électroluminescent
- dudit feuillet intercalaire et d'un autre feuillet intercalaire dit arrière côté surface d'entrée -et/ou dudit feuillet intercalaire et un autre feuillet intercalaire dit avant côté surface de sortie,
et/ou de l'optique de collimation et de l'optique de redirection assymétrique ou de l'optique de redirection holographique avec le feuillet intercalaire ou un autre feuillet intercalaire
l'élément électroluminescent et même l'optique de collimation et l'optique de redirection assymétrique ou l'élément électroluminescent et l'optique de redirection holographique étant dans un trou borgne ou traversant d'un desdits feuillets intercalaire et/ou l'élément électroluminescent et même l'optique de collimation et l'optique de redirection assymétrique ou l'élément électroluminescent et l'optique de redirection holographique étant en sandwich entre ledit feuillet intercalaire et l'autre feuillet intercalaire arrière ou avant.

## Patentansprüche

1. Kraftfahrzeugverglasung mit Außenlichtsignalisierung, ausgewählt aus einer Seitenscheibe, einer Rückscheibe oder einer Windschutzscheibe, insbesondere eines Automobils (100), umfassend:
- eine erste transparente Verglasung (1) aus Mineral- oder organischem Glas mit Hauptflächen (11, 12), die Fläche F1 und F2 genannt werden, und einer Kante (10) und einer Bezugsrichtung genannten Richtung
- eine Lichtquelle (3) seitens der Fläche F2 und in der Lage, die Außenlichtsignalisierung zu emittieren, wobei die Lichtquelle eine Austrittsoberfläche zu der Fläche F2 Austrittsoberfläche aufweist
**dadurch gekennzeichnet, dass** die Lichtquelle ein Elektrolumineszenzelement, das eine emittierende Oberfläche mit einer Länge von mindestens 5 cm und einer Breite von mindestens 1 cm aufweist und vorzugsweise von einer Dicke E0 im Submillimeterbereich ist, mit einem Emissionshalbwinkel an dem Scheitelpunkt von 50° bis 70° und einer Hauptemissionsrichtung senkrecht zu der Ebene des Elektrolumineszenzelements ist
dadurch, dass sie in einer Ausgestaltung gegenüber dem Elektrolumineszenzelement zwischen der Fläche F2 und dem Elektrolumineszenzelement eine Kollimationsoptik (5a, 5b) umfasst, die eine Rückfläche seitens der Austrittsoberfläche und eine der Rückfläche gegenüberliegende sogenannte Kollimationsvorderfläche aufweist
wobei die Kollimationsoptik aus transparentem Material vorzugsweise von einer Dicke im Submillimeterbereich ist, einen optischen Film oder eine Anordnung optischer Filme vorweist, die jeweils auf einer Vorderfläche, die der Austrittsoberfläche gegenüberliegt, ein Netz von Motiven mit Scheitelpunkten und mit einem Abstand T zwischen Scheitelpunkten von 10 µm bis 500 µm vorweist, wobei die Kollimationsoptik vorweist:
a) einen ersten optischen Film mit dem Netz von Motiven, die zweidimensional sind,
b) oder eine Anordnung von mindestens zwei optischen Filmen, die prismatisch sind, vorzugsweise von höchstens zwei prismatischen optischen Filmen, vorweisend in dieser Reihenfolge von der Austrittsoberfläche ausgehend:
- einen ersten optischen Film mit dem Netz von Motiven, bei denen es sich um Prismen handelt, die sich in Längsrichtung entlang einer ersten Achse erstrecken,
- und gegenüber des ersten optischen Films einen zweiten optischen Film mit einem zweiten Netz von Motiven, bei denen es sich um Prismen handelt, die sich in Längsrichtung entlang einer zweiten Achse erstrecken, die mit der ersten Achse einen Winkel von 90±1 0° bildet, wobei die erste oder die zweite Achse mit der Bezugsrichtung einen Winkel von höchstens 10° bildet und sogar parallel ist
c) oder einen einzelnen ersten optischen Film mit dem Netz von Motiven, bei denen es sich um Prismen handelt, wobei das Netz sich in Längsrichtung entlang einer Achse erstreckt, die einen Winkel von höchstens 10° mit der Bezugsrichtung bildet und sogar parallel ist
dadurch, dass für a) jedes zweidimensionale Motiv durch eine Flanke definiert ist und das zweidimensionale Motiv in einer Ebene P senkrecht zu dem Film einen Scheitelwinkel von 60 bis 110° besitzt, wobei jeder Schnittpunkt der Flanke mit der Ebene P einen Winkel von 30 bis 55° mit der Ebene des optischen Films bildet,
dadurch, dass für b) und c) jedes Prisma durch zwei Längsflächen definiert ist, wobei jedes Prisma einen Scheitelwinkel von 60 bis 110° besitzt und jede Längsfläche mit der Ebene des prismatischen optischen Films einen Winkel von 30 bis 55° bildet
dadurch, dass sie gegenüber der Kollimationsoptik eine Umlenkoptik (5) zwischen der Kollimationsoptik und der Fläche F2 aus transparentem Material umfasst, einen optischen Umlenkfilm oder eine Anordnung von optischen Umlenkfilmen vorweist, die jeweils auf einer vorderen Hauptfläche gegenüberliegend der Austrittsoberfläche ein Netz asymmetrischer Prismen mit Scheitelpunkten und mit einem Abstand T' zwischen den Scheitelpunkten von 10 µm bis 500 µm vorweist, wobei die Umlenkoptik somit vorweist:
i) einen asymmetrischen ersten optischen Film mit der Anordnung von asymmetrischen Prismen, die sich in Längsrichtung entlang einer dritten Achse erstrecken, die einen Winkel von höchstens 10° mit der Bezugsrichtung bildet und sogar parallel ist
j) oder eine Anordnung von zwei asymmetrischen optischen Filmen, die prismatisch sind, vorweisend in dieser Reihenfolge von der Austrittsoberfläche ausgehend:
- einen ersten asymmetrischen optischen Film mit der Anordnung von asymmetrischen Prismen, die sich in Längsrichtung entlang einer dritten Achse erstrecken, die einen Winkel von höchstens 10° mit der Bezugsrichtung bildet
- und gegenüber dem ersten asymmetrischen optischen Film einen zweiten asymmetrischen optischen Film mit einem zweiten Netz von prismatischen Motiven, wobei die Anordnung von Prismen des zweiten Netzes sich in Längsrichtung entlang einer vierten Achse erstreckt, die mit der dritten Achse einen Winkel von höchstens 10° bildet, und/oder die vierte Achse mit der Bezugsrichtung der Verglasung einen Winkel von höchstens 10° bildet
dadurch, dass für i) oder j) jedes asymmetrische Prisma durch eine erste und eine zweite Längsfläche definiert ist, wobei jedes Prisma einen Scheitelwinkel von 50 bis 60° besitzt, und eine erste Längsfläche, die lange Seite genannt wird, mit der Ebene des asymmetrischen optischen Films einen Winkel im Bereich von 31° bis 41° bildet
dadurch, dass:
- die Bezugsrichtung für die Rückscheibe oder die Windschutzscheibe die Horizontale in der Ebene der Rückscheibe oder der Windschutzscheibe ist
- und die Bezugsrichtung für die Seitenscheibe die Senkrechte zu der Horizontalen in der Ebene der Seitenscheibe ist
- die Senkrechte zu der langen Seite, die zu der Fläche F2 gerichtet ist, zu der Oberseite der Rückscheibe oder der Windschutzscheibe oder zu der Vorderseite der Seitenscheibe ausgerichtet ist
und dadurch, dass
- sich Luft zwischen der Austrittsoberfläche und der Eintrittsoberfläche des ersten optischen Films der Kollimationsoptik befindet,
- sich für b) und c) Luft zwischen den Prismen der Vorderfläche der Kollimationsoptik befindet,
- für a) die zweidimensionalen Motive vertieft sind, das Netz von zweidimensionalen Motiven ein Netz von Hohlräumen ist, die Scheitelpunkte S gegenüberliegend der Fläche F2 abgewandt ausgerichtet sind und die obere Oberfläche jedes Hohlraums von dem asymmetrischen prismatischen Film beabstandet oder in physischem Kontakt mit diesem ist, sich Luft in den Hohlräumen befindet oder die zweidimensionalen Motive reliefartig sind, die Scheitelpunkte der zweidimensionalen Motive jeder Vorderfläche beabstandet oder in physischem Kontakt mit dem asymmetrischen prismatischen Film sind, sich Luft zwischen den zweidimensionalen Motiven befindet
- sich Luft zwischen den asymmetrischen Prismen befindet, die abschließende Vorderfläche des asymmetrischen prismatischen Films von einem transparenten Element beabstandet oder in physischem Kontakt mit diesem ist, das sich von der ersten Verglasung unterscheidet oder dieser entspricht
oder dadurch, dass in einer alternativen Ausgestaltung die Verglasung gegenüber der Austrittsoberfläche eine holografische Umlenkoptik vorweist, insbesondere aus transparentem Material, die holografische Umlenkoptik eine Vorderfläche zu der Fläche F2 und eine gegenüberliegende Rückfläche vorweist, die holografische Umlenkoptik einen Film mit einem Netz aus holografischen Motiven auf der Vorderfläche vorweist, und sich Luft zwischen der Austrittsoberfläche und der Eintrittsoberfläche der holographischen Umlenkoptik befindet und die Luft sich zwischen den reliefartigen holografischen Motiven der Vorderfläche der holografischen Umlenkoptik befindet oder die Luft sich in den vertieften holografischen Motiven der Vorderfläche der holografischen Umlenkoptik befindet, die Vorderfläche des holografischen Umlenkfilms von einem transparenten Element beabstandet oder in physischem Kontakt mit diesem ist, das sich von der ersten Verglasung unterscheidet oder dieser entspricht.

2. Fahrzeugverglasung mit Außenlichtsignalisierung nach dem vorstehenden Anspruch, **dadurch gekennzeichnet, dass**:
- für die Rückscheibe die Lichtquelle vorzugsweise rot abstrahlt, wobei insbesondere die Anordnung von Lichtquelle und Kollimationsoptik und asymmetrischer Umlenkoptik ein (drittes) Bremslicht bildet oder die Anordnung von Lichtquelle und holographischer Umlenkoptik ein (drittes) Bremslicht bildet
- oder für die Rückscheibe oder die Windschutzscheibe die Lichtquelle vorzugsweise gelb abstrahlt, insbesondere die Anordnung von Lichtquelle und Kollimationsoptik und asymmetrischer Umlenkoptik einen Blinker bildet, beispielsweise in Form eines Pfeils, oder die Anordnung von Lichtquelle und holografischer Umlenkoptik einen Blinker bildet, beispielsweise in Form eines Pfeils
- und/oder für die Rückscheibe oder die Windschutzscheibe die Lichtquelle ein besonders aufmerksamkeitsstarkes Piktogramm wie ein Warndreieck oder eine Sicherheitsabstandsangabe ist.

3. Fahrzeugverglasung mit Außenlichtsignalisierung nach einem der vorstehenden Ansprüche, **dadurch gekennzeichnet, dass** sie eine Vielzahl von Elektrolumineszenzelementen, insbesondere OLED oder TFEL oder QLED, jeweils mit der holografischen Umlenkoptik oder mit der Anordnung von Kollimationsoptik und asymmetrischer Umlenkoptik, insbesondere Lichtquellen in dem oberen Rand der Rückscheibe vorweist.

4. Fahrzeugverglasung mit Außenlichtsignalisierung nach einem der Ansprüche 1 oder 3, **dadurch gekennzeichnet, dass** für die Seitenscheibe, insbesondere feststehend, als ein Deflektor, die Lichtquelle gelb abstrahlt, insbesondere die Anordnung von Lichtquelle und Kollimationsoptik und asymmetrischer Umlenkoptik einen Blink-Repeater bildet oder die Anordnung von Lichtquelle und holographischer Umlenkoptik einen Blink-Repeater bildet.

5. Fahrzeugverglasung mit Außenlichtsignalisierung nach einem der vorstehenden Ansprüche, **dadurch gekennzeichnet, dass** die Prismen oder die zweidimensionalen Motive und vorzugsweise die asymmetrischen Prismen zusammenhängend oder im Wesentlichen zusammenhängend sind.

6. Kraftfahrzeugverglasung mit Außenlichtsignalisierung nach einem der vorstehenden Ansprüche, **dadurch gekennzeichnet, dass** der oder jeder optische Film ein Kunststofffilm ist, der in seiner Dicke teilweise texturiert ist.

7. Kraftfahrzeugverglasung mit Außenlichtsignalisierung nach einem der vorstehenden Ansprüche, **dadurch gekennzeichnet, dass** das Elektrolumineszenzelement eine OLED genannte organische Elektrolumineszenzdiode, insbesondere transparent (TOLED), oder eine QLED genannte Quantenpunkt-Elektrolumineszenzdiode ist.

8. Kraftfahrzeugverglasung mit Außenlichtsignalisierung nach einem der vorstehenden Ansprüche, **dadurch gekennzeichnet, dass** sie, insbesondere für die OLED, einen Farbfilter umfasst, insbesondere einen Kunststofffilm mit Dicke im Submillimeterbereich, der ist:
- zwischen der Austrittsoberfläche und der Rückfläche der Kollimationsoptik, insbesondere des ersten optischen Films
oder
- zwischen der Austrittsoberfläche und der Eintrittsoberfläche der holografischen Umlenkoptik, insbesondere des optischen Films
oder
- zwischen der Umlenkoptik und einer Verbundzwischenlage, wobei ein Filter dann einen Schutzfilm bildet.

9. Kraftfahrzeugverglasung mit Außenlichtsignalisierung nach einem der vorstehenden Ansprüche, **dadurch gekennzeichnet, dass** das Elektrolumineszenzelement eine rückseitig emittierende OLED ist, die einen Träger vorweist, der gegenüber der Fläche F2 in dieser Reihenfolge von dem Träger ausgehend trägt: eine eventuelle untere Funktionsschicht, eine transparente Anode, ein organisches Elektrolumineszenzsystem, eine reflektierende Kathode.

10. Kraftfahrzeugverglasung mit Außenlichtsignalisierung nach einem der vorstehenden Ansprüche, **dadurch gekennzeichnet, dass** die erste Verglasung gekrümmt ist, das Elektrolumineszenzelement, insbesondere OLED oder QLED, flexibel ist.

11. Kraftfahrzeugverglasung mit Außenlichtsignalisierung nach einem der vorstehenden Ansprüche, **dadurch gekennzeichnet, dass** sie ein elektrisches Anschlusselement für das Elektrolumineszenzelement vorweist, das mit dem Elektrolumineszenzelement verbunden ist und von der Kante der ersten Verglasung vorsteht.

12. Kraftfahrzeugverglasung mit Außenlichtsignalisierung nach einem der vorstehenden Ansprüche, **dadurch gekennzeichnet, dass** die Kollimationsoptik an dem Elektrolumineszenzelement an einem Umfang der Austrittsoberfläche, vorzugsweise durch einen insbesondere transparenten Klebstoff, über ihre Rückfläche befestigt ist, und sogar von dem Umfang der emittierenden Fläche, befestigt ist, und dadurch, dass die asymmetrische Umlenkoptik an dem Umfang der endgültigen Vorderfläche an der Kollimationsoptik befestigt ist, insbesondere durch einen vorzugsweise transparenten Klebstoff, oder dadurch, dass die holografische Umlenkoptik an dem Elektrolumineszenzelement an dem Umfang der Austrittsoberfläche befestigt ist, über ihre Rückfläche, vorzugsweise durch einen insbesondere transparenten Klebstoff, und sogar der emittierenden Fläche befestigt ist.

13. Kraftfahrzeugverglasung mit Außenlichtsignalisierung nach einem der vorstehenden Ansprüche, **dadurch gekennzeichnet, dass** sie eine Verbundverglasung vorweist, vorweisend:
- die erste transparente Verglasung (1),
- eine zweite transparente Verglasung (1') aus Mineral- oder organischem Glas, deren Hauptflächen (13, 14) Fläche F3 und F4 genannt werden,
- zwischen den Flächen F2 und F3, die die Innenflächen der Verbundverglasung sind, eine transparente Verbundzwischenlage, gegebenenfalls getönt und/oder in ihrer Dicke zusammengesetzt, aus Polymermaterial (2, 20), einen Verbundzwischenlagenfilm, der eine Hauptfläche FA seitens der Fläche F3 und eine Hauptfläche FB seitens der Fläche F2 aufweist, Fläche FA, die in Klebekontakt mit Fläche F3 steht, und Fläche FB in Klebekontakt mit Fläche F2, wobei das Elektrolumineszenzelement sich zwischen den Flächen F2 oder F3 und vorzugsweise der Kollimationsoptik und der asymmetrischen Umlenkoptik zwischen den Flächen F2 oder F3 befindet oder die holografische asymmetrische Umlenkoptik sich zwischen den Flächen F2 oder F3 oder dem Elektrolumineszenzelement auf der Fläche F4 befindet und vorzugsweise die holografische asymmetrische Umlenkoptik sich seitens der Fläche F4 befindet, oder vorzugsweise sich die Kollimationsoptik und die asymmetrische Umlenkoptik seitens der Fläche F4 befinden.

14. Kraftfahrzeugverglasung mit Außenlichtsignalisierung nach einem der vorstehenden Ansprüche, **dadurch gekennzeichnet, dass** die asymmetrische oder gegebenenfalls holografische Umlenkoptik an dem transparenten Element an dem Umfang der endgültigen Vorderfläche anliegt oder daran befestigt ist, beispielsweise an der Fläche F2 oder der Fläche F4 einer Verbundverglasung, die eine zweite transparente Verglasung (1') aus Mineral- oder organischem Glas vorweist, deren Hauptflächen (13, 14) Fläche F3 und F4 genannt werden, insbesondere durch einen vorzugsweise transparenten Klebstoff befestigt ist.

15. Kraftfahrzeugverglasung mit Außenlichtsignalisierung nach einem der Ansprüche 1 bis 12, **dadurch gekennzeichnet, dass** sie eine Verbundverglasung vorweist, vorweisend:
- die erste transparente Verglasung (1),
- eine zweite transparente Verglasung (1') aus Mineral- oder organischem Glas, deren Hauptflächen (13, 14) Fläche F3 und F4 genannt werden,
- zwischen den Flächen F2 und F3, bei denen es sich um die Innenseiten der Verbundverglasung handelt, eine transparente Verbundzwischenlage, vorzugsweise aus PVB, gegebenenfalls getönt und/oder gegebenenfalls in ihrer Dicke zusammengesetzt, aus polymerem Material (2), wobei der Verbundzwischenlagenfilm eine Hauptfläche FA seitens Fläche F3 und eine Hauptfläche FB seitens Fläche F2 aufweist, Fläche FA, die mit Fläche F3 in Klebekontakt steht, und Fläche FB, die mit Fläche F2 in Klebekontakt steht, wobei die Kollimationsoptik breiter als das Elektrolumineszenzelement ist und an dem Umfang befestigt, vorzugsweise durch einen insbesondere transparenten Klebstoff verklebt, oder an dem Umfang über ihre Rückfläche in Klebekontakt mit der Verbundzwischenlage steht, und gegebenenfalls die asymmetrische Umlenkoptik breiter als das Elektrolumineszenzelement ist und über ihre Rückfläche an der Kollimationsoptik an dem Umfang befestigt ist, vorzugsweise verklebt, insbesondere durch einen transparenten Klebstoff
- oder die Kollimationsoptik an der Austrittsoberfläche an dem Umfang befestigt ist, vorzugsweise verklebt, insbesondere durch einen transparenten Klebstoff, und die asymmetrische Umlenkoptik breiter als das Elektrolumineszenzelement ist und an dem Umfang an der Verbundzwischenlage befestigt ist, vorzugsweise verklebt, insbesondere durch einen transparenten Klebstoff, oder über ihre Rückfläche an dem Umfang mit der Verbundzwischenlage in Klebekontakt steht
oder die holografische Umlenkoptik breiter als das Elektrolumineszenzelement ist und an der Verbundzwischenlage an dem Umfang befestigt ist, vorzugsweise verklebt, insbesondere durch einen transparenten Klebstoff, oder über ihre Rückfläche an dem Umfang mit der Verbundzwischenlage in Klebekontakt steht.

16. Kraftfahrzeugverglasung mit Außenlichtsignalisierung nach einem der Ansprüche 1 bis 15, **dadurch gekennzeichnet, dass** die Fläche F2 frei ist, die Verglasung monolithisch ist, sich die holografische oder asymmetrische Umlenkoptik auf der Fläche F2 befindet oder wenn die Verglasung ein Verbund ist und das Elektrolumineszenzelement sich seitens der freien Fläche F4 befindet:
die gegebenenfalls holografische Umlenkoptik über ihre Rückfläche an dem Elektrolumineszenzelement an dem Umfang befestigt ist, vorzugsweise insbesondere durch einen vorzugsweise transparenten Klebstoff an dem Umfang der Austrittsoberfläche verklebt
oder die Kollimationsoptik über ihre Rückfläche an dem Elektrolumineszenzelement an dem Umfang befestigt ist, vorzugsweise insbesondere durch einen vorzugsweise transparenten Klebstoff an dem Umfang der Austrittsoberfläche verklebt
und/oder dadurch, dass die Anordnung von Elektrolumineszenzelement / Kollimationsoptik / asymmetrische Umlenkoptik oder die Anordnung von Elektrolumineszenzelement / holografischer Umlenkoptik an der freien Fläche F4 oder F2 befestigt ist, vorzugsweise über einen rückseitigen Schutzfilm, der sich auf der Eintrittsoberfläche des Elektrolumineszenzelement befindet, mit einem vorstehenden Befestigungsteil auf der freien Fläche F4 oder F2 verklebt.

17. Kraftfahrzeugverglasung mit Außenlichtsignalisierung nach Anspruch 13, **dadurch gekennzeichnet, dass** sich die holographische Lenkoptik oder die Kollimationsoptik, vorzugsweise die Umlenkoptik, zwischen den Flächen F2 und F3 befindet, sich das Elektrolumineszenzelement zwischen den Flächen F2 und F3 und in der Zone mit dem Elektrolumineszenzelement die Fläche FA in Klebekontakt mit der Fläche F3 steht oder der Seite der Austrittsoberfläche, und die Fläche FB in Klebekontakt mit der Fläche F2 steht und das transparente Element ein Kunststoffschutzfilm ist, auf der endgültigen Vorderfläche, mit einer Fläche, die zu der Fläche F2 ausgerichtet ist und in Klebekontakt mit der Verbundzwischenlage steht, wobei der Kunststoffschutzfilm lokal ist, gegebenenfalls mit einer sogenannten Erweiterungszone, die von den Rändern der endgültigen Vorderfläche höchstens 10 cm vorsteht.

18. Kraftfahrzeugverglasung mit Außenlichtsignalisierung nach einem der Ansprüche 14 bis 18, **dadurch gekennzeichnet, dass** die Verbundzwischenlage zusammengesetzt ist und außerhalb der Zone des Elektrolumineszenzelements folgenden Stapel vorweist: PVB/Funktionskunststofffilm gegebenenfalls mit elektrisch leitfähiger Funktionsbeschichtung seitens der Fläche F2 oder F3/PVB, wobei der Funktionskunststofffilm sich über die Fläche F2 erstreckt, und dadurch, dass das Elektrolumineszenzelement zwischen den Flächen F2 und F3 liegt, wobei zwischen der Vorderfläche und der Fläche F3 der Kunststofffilm/das PVB vorhanden ist, das transparente Element der Funktionskunststofffilm auf der Vorderfläche ist.

19. Kraftfahrzeugverglasung mit Außenlichtsignalisierung nach einem der Ansprüche 12 bis 18, **dadurch gekennzeichnet, dass** die Verbundzwischenlage ein akustisches PVB vorweist und/oder getönt ist, wobei die Verbundzwischenlage insbesondere ein PVB ist, das mindestens teilweise in seiner Dicke getönt ist, wobei der getönte Teil mindestens zwischen dem Elektrolumineszenzelement und der Fläche F3 liegt.

20. Kraftfahrzeugverglasung mit Außenlichtsignalisierung nach einem der Ansprüche 13 bis 19, **dadurch gekennzeichnet, dass** das Elektrolumineszenzelement in einer Öffnung der Verbundzwischenlage aufgenommen ist und vorzugsweise die Kollimationsoptik und die Umlenkoptik in der Öffnung aufgenommen sind, oder die holografische Lenkoptik in der Öffnung aufgenommen ist, die Öffnung eine Blindöffnung mit einem Boden in Richtung der Fläche F3 ist und in Fläche F2 mündet oder sich die sogenannte innere Öffnung in der Dicke der Verbundzwischenlage befindet und das transparente Element ein Schutzfilm ist, der in der inneren Öffnung aufgenommen ist oder der breiter als die innere Öffnung ist und die innere Öffnung bedeckt.

21. Fahrzeug, das mindestens eine Lichtverglasung nach einem der vorstehenden Ansprüche vorweist.

22. Verfahren zum Herstellen einer Kraftfahrzeugverglasung mit Außenlichtsignalisierung nach einem der vorstehenden Ansprüche, **dadurch gekennzeichnet, dass** es vor dem Platzieren auf die erste Verglasung ein Vormontieren auf das Elektrolumineszenzelement, insbesondere auf die Austrittsoberfläche, vorweist von:
- der Kollimationsoptik als Film(e), insbesondere durch umlaufende Befestigung, sogar durch umlaufende Verklebung, die gegebenenfalls eine Dichtung bildet, und sogar der asymmetrischen Umlenkoptik als Film(e), insbesondere durch umlaufende Befestigung, sogar durch umlaufende Verklebung, die gegebenenfalls eine Dichtung bildet
- oder der holografischen Umlenkoptik als Film, insbesondere durch umlaufende Befestigung, sogar durch umlaufende Verklebung, die gegebenenfalls eine Dichtung bildet
- und sogar gegebenenfalls einem gegebenenfalls eingefärbten Schutzfilm auf dem letzten optischen Umlenkfilm, insbesondere durch umlaufende Befestigung, sogar durch umlaufende Verklebung, die gegebenenfalls eine Dichtung bildet.

23. Verfahren zum Herstellen einer Kraftfahrzeugverbundverglasung mit Außenlichtsignalisierung nach einem der Ansprüche 13 bis 20,
**dadurch gekennzeichnet, dass** es die folgenden Schritte vorweist:
- Positionieren des Elektrolumineszenzelements auf einer massiven Verbundzwischenlage oder in einer Blind- oder Durchgangsöffnung und gleichzeitiges oder getrenntes Positionieren der Kollimationsoptik und der asymmetrischen Umlenkoptik oder der holografischen Umlenkoptik gegenüber dem Elektrolum ineszenzelement
und nacheinander:
- Platzieren der positionierten Anordnung zwischen der ersten und zweiten Verglasung
- Zusammenlaminieren unter Vakuum und Erwärmung oder sogar Druckbeaufschlagung.

24. Verfahren zum Herstellen einer Kraftfahrzeugverbundverglasung mit Außenlichtsignalisierung nach dem vorstehenden Anspruch,
**dadurch gekennzeichnet, dass** das Positionieren des Elektrolumineszenzelements auf der Verbundzwischenlage in einer Blind- oder Durchgangsöffnung seitens der Eintrittsoberfläche erfolgt, mit der holografischen Umlenkoptik oder der Kollimationsoptik und sogar der asymmetrischen Umlenkoptik in der Öffnung aufgenommen und an dem Umfang der Austrittsoberfläche befestigt und vorzugsweise verklebt, oder mit der holografischen oder asymmetrischen Umlenkoptik, die die Öffnung abdeckt und auf der Verbundzwischenlage liegt.

25. Verfahren zum Herstellen einer Kraftfahrzeugverbundverglasung mit Außenlichtsignalisierung nach einem der vorstehenden Ansprüche,
**dadurch gekennzeichnet, dass** es vor dem Positionieren das Befestigen, insbesondere durch umlaufendes Verkleben eines gegebenenfalls eingefärbten lokalen Schutzfilms, auf der endgültigen Vorderfläche der asymmetrischen oder holografischen Umlenkoptik vorweist und während des Positionierens die Verbundzwischenlage ein Blindloch aufweist, das den lokalen Schutzfilm aufnimmt, oder die Verbundzwischenlage ein Durchgangsloch aufweist und eine weitere Verbundzwischenlage das Loch verschließt.

26. Verfahren zum Herstellen einer Kraftfahrzeugverbundverglasung mit Außenlichtsignalisierung nach einem der vorstehenden Ansprüche,
**dadurch gekennzeichnet, dass** die Verbundzwischenlage ein Durchgangsloch aufweist, welches das Elektrolumineszenzelement und die Kollimationsoptik und die asymmetrische Umlenkoptik oder das Elektrolumineszenzelement und die holografische Umlenkoptik aufnimmt, wobei das Verfahren das Platzieren eines gegebenenfalls eingefärbten Schutzfilms, der das Loch verschließt, und einer weiteren Zwischenlagenschicht, die den Schutzfilm bedeckt, wobei die weitere Zwischenlagenschicht gegebenenfalls bereits in Klebekontakt mit dem Schutzfilm steht, vorweist.

27. Verfahren zum Herstellen einer Kraftfahrzeugverbundverglasung mit Außenlichtsignalisierung nach einem der vorstehenden Ansprüche,
**dadurch gekennzeichnet, dass** es das punktuelle Bringen in Klebekontakt durch Erwärmen und Druck außerhalb der Elektrolumineszenzelementzone umfasst von
- der Zwischenlagenschicht und einer weiteren Zwischenlagenschicht, die rückseitig genannt wird, seitens der Eintrittsoberfläche, und/oder der Zwischenlagenschicht und einer weiteren Zwischenlagenschicht, die vorderseitig genannt wird, auf der Vorderseite der Austrittsoberfläche,
und/oder der Kollimationsoptik und der asymmetrischen Umlenkoptik oder der holografischen Umlenkoptik mit der Zwischenlagenschicht oder einer weiteren Zwischen lagensch icht
wobei sich das Elektrolumineszenzelement und sogar die Kollimationsoptik und die asymmetrische Umlenkoptik oder das Elektrolumineszenzelement und die holografische Umlenkoptik in einem Blindloch oder Durchgangsloch einer der Zwischenlagenschichten befinden und/oder das Elektrolumineszenzelement und sogar die Kollimationsoptik und die asymmetrische Umlenkoptik oder das Elektrolumineszenzelement und die holografische Umlenkoptik zwischen der Zwischenlagenschicht und der weiteren rückseitigen oder vorderseitigen Zwischenlagenschicht eingeschlossen sind.

## Claims

1. An external luminous signaling vehicle glazing chosen from a side window, a rear window or a windshield, in particular that of a motor-vehicle (100), comprising:
- a transparent first glazing (1), made of mineral or organic glass, with main faces (11, 12) called faces F1 and F2, and an edge face (10) and what is called a reference direction
- a light source (3) face-F2 side and able to emit external signaling light, said light source having an exit surface toward face F2
**characterized in that** the light source is an electroluminescent element which has an emitting area of length of at least 5 cm and of width of at least 1 cm, and is preferably of submillimeter-sized thickness E0, with an emission half angle at the apex of 50° to 70° and a main emission direction normal to the plane of said electroluminescent element
**in that**, in one configuration, it comprises, facing said electroluminescent element, between face F2 and said electroluminescent element, a collimation optic (5a, 5b) having a rear face exit-surface side and a front face called the collimation face opposite the rear face
the collimation optic, which is made of transparent material, is preferably of submillimeter-sized thickness, includes an optical film or a set of optical films each including on a front face opposite to the exit surface an array of features with apexes and with a pitch T between apexes that is from 10 µm to 500 µm, the collimation optic includes:
a) a first optical film, with said array of features that are two-dimensional,
b) or a set of at least two optical films that are prismatic, preferably of at most two prismatic optical films, including in this order starting from the exit surface:
- a first optical film with said array of features that are prisms extending longitudinally along a first axis,
- and, facing the first optical film, a second optical film with the second array of features that are prisms extending longitudinally along a second axis making an angle to said first axis of 90±10°, the first or second axis makes to the reference direction an angle of at most 10° and even is parallel
c) or a single first optical film with said array of features that are prisms, the array of prisms extending longitudinally along an axis that makes an angle of at most 10° to the reference direction and even is parallel
**in that** for a) each two-dimensional feature being defined by a flank and in a plane P normal to the film each two-dimensional feature has an angle at the apex ranging from 60 to 110°, each intersection of the flank with the plane P making with the plane of the optical film an angle ranging from 30 to 55°,
**in that** for b) and c) each prism being defined by two longitudinal faces, each prism has an angle at the apex ranging from 60 to 110°, and each longitudinal face makes an angle ranging from 30 to 55° to the plane of the prismatic optical film in that so that it comprises facing the collimation optic, a redirection optic (5), between the collimation optic and face F2, made of transparent material, includes a redirection optical film or a set of redirection optical films each including on a front face opposite to the exit surface an array of asymmetric prisms with apexes and with a pitch T' between apexes that is from 10 µm to 500 µm, the redirection optic thus includes:
i) a first asymmetric optical film with the set of asymmetric prisms extending longitudinally along a third axis that makes an angle of at most 10° to the reference direction and even is parallel
j) or a set of two asymmetric optical films that are prismatic, including in this order starting from the exit surface:
- a first asymmetric optical film with the set of asymmetric prisms extending longitudinally along a third axis that makes an angle of at most 10° to the reference direction
- and facing the first asymmetric optical film, a second asymmetric optical film with the second array of prismatic features, the set of prisms of the second array extending longitudinally along a fourth axis making an angle to said third axis of at most 10° and/or the fourth axis makes an angle with the reference direction of the glazing of at most 10°
**in that** for i) or j) each asymmetric prism being defined by first and second longitudinal faces, each prism makes an angle to the apex ranging from 50 to 60°, and a first longitudinal face, called the long side, makes to the plane of the asymmetric optical film an angle ranging from 31° to 41°
**in that**:
- the reference direction for the rear window or the windshield is the horizontal in the plane of the rear window or windshield
- and the reference direction for the side window is the normal to the horizontal in the plane of the side window
- the normal to the long side directed toward the face F2 is oriented toward the top of the rear window or of the windshield or toward the front of the side window
and **in that**
- air is between the exit surface and the entrance face of the first optical film of the collimation optic
- for b) and c) air is between the prisms of the front face of the collimation optic,
- for a) the two-dimensional features are recessed, the array of two-dimensional features is an array of cavities, the apexes S are oriented to opposite face F2 and the top surface of each cavity is spaced apart from or in physical contact with the asymmetric prismatic film, air is in the cavities, or the two-dimensional features are raised, the apexes of the two-dimensional features of each front face are spaced apart or in physical contact with the asymmetric prismatic film, air is between the two-dimensional features
- air is between the asymmetric prisms, the final front face of the asymmetric prismatic film is spaced apart from or in physical contact with a transparent element that is distinct from or that corresponds to the first glazing
or **in that**, in an alternative configuration, the glazing includes facing the exit surface a holographic redirection optic, in particular made of transparent material, the holographic redirection optic includes a front face toward face F2 and an opposite rear face, the holographic redirection optic includes a film with an array of holographic features on the front face and air is between the exit surface and the entrance face of the holographic redirection optic and air is between the raised holographic features of the front face of the holographic redirection optic or air is in the recessed holographic features of the front face of the holographic redirection optic, the front face of the holographic redirection film is spaced apart from or in physical contact with a transparent element that is distinct from or that corresponds to the first glazing.

2. The external luminous signaling vehicle glazing as claimed in the preceding claim, **characterized in that**:
- for the rear window, the light source preferably emits in the red, in particular the light source and collimation optic and asymmetric redirection optic forming a (third) stoplight or the light source and holographic redirection optic together forming a (third) stoplight
- or, for the rear window or windshield, the light source preferably emits in the yellow, in particular the light source and collimation optic and asymmetric redirection optic forming an indicator light, for example of arrow shape, or the assembly consisting of the light source and holographic redirection optic forming an indicator light, for example of arrow shape
- and/or for the rear window or the windshield, the light source is a pictogram in particular a warning pictogram such as a hazard warning light or provides information on safety distance.

3. The external luminous signaling vehicle glazing as claimed in one of the preceding claims, **characterized in that** it includes a plurality of electroluminescent elements, in particular OLEDs or TFELs or QLEDs, each with the holographic redirection optic or with the assembly consisting of the collimation optic and the asymmetric redirection optic, which sources are in particular on the upper border of the rear glazing.

4. The external luminous signaling vehicle glazing as claimed in claim 1 or 3, **characterized in that**, for the side window, which is in particular fixed, as a deflector, the light source emits in the yellow, in particular the assembly consisting of the light source and the collimation optic and the asymmetric redirection optic forming a side repeater or the assembly consisting of the light source and the holographic redirection optic forming a side repeater.

5. The external luminous signaling vehicle glazing as claimed in one of the preceding claims, **characterized in that** the prisms or the two-dimensional features and preferably the asymmetric prisms are contiguous or essentially contiguous.

6. The external luminous signaling vehicle glazing as claimed in one of the preceding claims, **characterized in that** the or each optical film is a plastic film that is partially textured in its thickness.

7. The external luminous signaling vehicle glazing as claimed in any one of the preceding claims, **characterized in that** the electroluminescent element is an organic light-emitting diode, i.e. a so-called OLED, in particular a transparent organic light-emitting diode (TOLED) or a quantum-dot light-emitting diode, i.e. a so-called QLED.

8. The external luminous signaling vehicle glazing as claimed in one of the preceding claims, **characterized in that**, in particular for the OLED, it comprises a color filter, in particular a plastic film of submillimeter-sized thickness, which is:
- between the exit surface and the rear face of the collimation optic in particular first optical film
or
- between the exit surface and the rear face of the holographic redirection optic in particular optical film
or
- between the redirection optic and a lamination interlayer, said filter then forming a protective film.

9. The external luminous signaling vehicle glazing as claimed in one of the preceding claims, **characterized in that** the electroluminescent element is a backemitting OLED including a carrier that bears, side opposite face F2, in this order starting from the carrier: an optional functional sublayer, a transparent anode, an organic electroluminscent system, a reflective cathode.

10. The external luminous signaling vehicle glazing as claimed in one of the preceding claims, **characterized in that** the first glazing is curved and the electroluminescent element, in particular an OLED or QLED, is flexible.

11. The external luminous signaling vehicle glazing as claimed in one of the preceding claims, **characterized in that** it includes an element for electrically connecting said electroluminescent element, which is connected to said electroluminescent element and which extends beyond the edge face of the first glazing.

12. The external luminous signaling vehicle glazing as claimed in one of the preceding claims, **characterized in that** the collimation optic is fastened to the electroluminescent element on the periphery of the exit surface, fastened via its rear face, preferably by an in particular transparent adhesive, and even of the emitting face, and **in that** the asymmetric redirection optic is fastened to the periphery of the final front face of the collimation optical film in particular by a preferably transparent adhesive or in that the holographic redirection optic is fastened to the electroluminescent element on the periphery of the exit surface, fastened via its rear face, preferably by and in particular transparent adhesive, and even of the emitting face.

13. The external luminous signaling vehicle glazing as claimed in one of the preceding claims, **characterized in that** it includes a laminated glazing including:
- said first transparent glazing (1),
- a second transparent glazing (1') made of mineral or organic glass, with main faces (13, 14) called faces F3 and F4,
- between faces F2 and F3, which are the internal faces of the laminated glazing, a transparent lamination interlayer that is optionally tinted and/or optionally composite in its thickness, made of polymeric material (2, 20), the lamination interlayer film having a main face FA face-F3 side and a main face FB face-F2 side, face FA making adhesive contact with face F3 and face FB making adhesive contact with face F2, the electroluminescent element being between faces F2 and F3 and preferably the collimation optic and the asymmetric redirection optic between faces F2 and F3 or the holographic asymmetric redirection optic is between the faces F2 and F3 or the electroluminescent element on face F4 and preferably the holographic asymmetric redirection optic is face-F4 side or preferably the collimation optic and the asymmetric redirection optic are face-F4 side.

14. The external luminous signaling vehicle glazing as claimed in one of the preceding claims, **characterized in that** the optionally holographic or asymmetric redirection optic is against or fastened to the transparent element on the periphery of the final front face for example to face F2 or face F4 of a laminated glazing including a second transparent glazing (1') made of mineral or organic glass, with main faces (13, 14) called faces F3 and F4, in particular fixed by a preferably transparent adhesive.

15. The external luminous signaling vehicle glazing as claimed in one of claims 1 to 12, **characterized in that** it includes a laminated glazing including:
- said first transparent glazing (1),
- a second transparent glazing (1') made of mineral or organic glass, with main faces (13, 14) called faces F3 and F4,
- between faces F2 and F3, which are the internal faces of the laminated glazing, a transparent lamination interlayer, which is preferably made of PVB, which is optionally tinted and/or optionally composite in its thickness, made of polymeric material (2), said lamination interlayer film having a main face FA face-F3 side and a main face FB face-F2 side, which face FA makes adhesive contact with face F3, and which face FB makes adhesive contact with face F2, the collimation optic is larger than the electroluminescent element and is fastened on its periphery and preferably adhesively bonded by an in particular transparent adhesive to, or on its periphery makes adhesive contact via its rear face with said lamination interlayer and optionally the asymmetric redirection optic is larger than the electroluminescent element and is fastened on its periphery and preferably adhesively bonded by an in particular transparent adhesive via its rear face to the collimation optic
- or the collimation optic is fastened on its periphery and preferably adhesively bonded by an in particular transparent adhesive to the exit surface and the asymmetric redirection optic is larger than the electroluminescent element and is fastened on its periphery and preferably adhesively bonded by an in particular transparent adhesive to said lamination interlayer or makes on its periphery adhesive contact via its rear face with said lamination interlayer
or the holographic redirection optic is larger than the electroluminescent element and is fastened on its periphery and preferably adhesively bonded by an in particular transparent adhesive to said lamination interlayer or makes on its periphery adhesive contact via its rear face with said lamination interlayer.

16. The external luminous signaling vehicle glazing as claimed in one of claims 1 to 15, **characterized in that** face F2 is free, the glazing is monolithic, the asymmetrical or holographic redirection optic is on face F2 or if the glazing is laminated and the electroluminescent element is on the side of the free face F4:
the optionally holographic redirection optic is fastened on its periphery and preferably adhesively bonded, to the electroluminescent element, via its rear face, in particular by a preferably transparent adhesive on the periphery of the exit surface or the collimation optic is fastened on its periphery and preferably adhesively bonded, to the electroluminescent element, via its rear face, in particular by a preferably transparent adhesive on the periphery of the exit surface
and/or **in that** the assembly consisting of the electroluminescent element/collimation optic/asymmetric redirection optic or the assembly consisting of the electroluminescent element/holographic redirection optic is fastened, and preferably adhesively bonded, to the free face F4 or F2 via a protective rear film that is on the entrance surface of said electroluminescent element with a protruding fastening portion that extends onto the free face F4 or F2.

17. The external luminous signaling vehicle glazing as claimed in claim 13, **characterized in that** the holographic direction optic or the collimation optic and preferably the direction optic is between face F2 and F3, the electroluminescent element is between face F2 and F3 and in the zone with the electroluminescent element the face FA makes adhesive contact with face F3 or with the side of the exit surface, and the face FB makes adhesive contact with face F2 and the transparent element is a plastic protective film, on the final front face, with a face oriented toward face F2 and makes adhesive contact with the lamination interlayer, the protective plastic film being local optionally with a so-called extension zone extending beyond the edges of the final front face by at most 10 cm.

18. The external luminous signaling vehicle glazing as claimed in one of claims 14 to 18, **characterized in that** the lamination interlayer is composite and includes the following stack outside of the zone of the electroluminescent element: PVB/functional plastic film with an optional electrically conductive functional coating face F2 or F3 side/PVB, the functional plastic film extending over face F2, and **in that** the electroluminescent element is between face F2 and F3, between the front face and face F3 is present said plastic film/said PVB, the transparent element is the functional plastic film on the front face.

19. The external luminous signaling vehicle glazing as claimed in one of claims 12 to 18, **characterized in that** the lamination interlayer includes an acoustic PVB and/or is tinted, the lamination interlayer, in particular is a PVB that is at least partially tinted in its thickness, the tinted portion being at least between the electroluminescent element and face F3.

20. The external luminous signaling vehicle glazing as claimed in one of the claims 13 to 19, **characterized in that** the electroluminescent element is housed in an aperture of the lamination interlayer and preferably the collimation optic and the redirection optic are housed in said aperture or the holographic direction optic is housed in said aperture, the aperture is blind with a bottom in the direction of face F3 and opens onto face F2, or the so-called internal aperture is in the thickness of the lamination interlayer and said transparent element is a protective film housed in said internal aperture or larger then said internal aperture and covering said internal aperture.

21. A vehicle including at least one luminous glazing as claimed in any one of the preceding claims.

22. A process for manufacturing an external luminous signaling vehicle glazing as claimed in one of the preceding glazing claims, **characterized in that** it includes, before installation on the first glazing, pre-mounting, on the electroluminescent element, in particular on its exit surface:
- the film-based collimation optic, in particular by peripheral fastening and even by peripheral adhesive bonding optionally forming a seal, and even the film-based asymmetric redirection optics, in particular by peripheral fastening and even by peripheral adhesive bonding optionally forming a seal
- or the film-based holographic redirection optic, in particular by peripheral fastening and even by peripheral adhesive bonding optionally forming a seal
- and even optionally an optionally colored protective film on the last redirection optical film, in particular by peripheral fastening and even by peripheral adhesive bonding optionally forming a seal.

23. A process for manufacturing an external luminous signaling vehicle laminated glazing as claimed in one of claims 13 to 20, **characterized in that** it includes the following steps:
- positioning the electroluminescent element on an unapertured lamination interlayer or in a through- or blind aperture and simultaneously or separately positioning the collimation optic and the asymmetric redirection optic or the holographic redirection optic facing the electroluminescent element
and successively:
- installing the assembly positioned between the first and second glazing
- laminating under vacuum and with heating or even under pressure.

24. The process for manufacturing an external luminous signaling vehicle laminated glazing as claimed in the preceding process claim, **characterized in that** the electroluminescent element is positioned on said lamination-interlayer sheet in a through- or blind aperture entrance-surface side, with the holographic redirection optic or with the collimation optic or even indeed the asymmetric redirection optic housed in the aperture and fastened, and preferably adhesively bonded, on the periphery of the exit surface or with the asymmetric or holographic redirection optic capping the aperture and on said lamination-interlayer sheet.

25. The process for manufacturing an external luminous signaling vehicle laminated glazing as claimed in one of the preceding process claims, **characterized in that** it includes, before said positioning, fastening, in particular by peripheral adhesive bonding, an, optionally colored, local protective film to the final front face of the holographic or asymmetric redirection optic and during said positioning said lamination interlayer has a blind hole housing the local protective film or said lamination interlayer has a through-hole and another lamination interlayer closes the hole.

26. The process for manufacturing an external luminous signaling vehicle laminated glazing as claimed in one of the preceding process claims, **characterized in that** said lamination interlayer having a through-hole housing the electroluminescent element, and the collimation optic and the asymmetric redirection optic or the electroluminescent element and the holographic redirection optic, the process includes placing an, optionally colored, protective film closing the hole and another interlayer sheet covering the protective film, said other sheet optionally already making adhesive contact with the local covering or protective film.

27. The process for manufacturing an external luminous signaling vehicle laminated glazing as claimed in one of the preceding process claims, **characterized in that** it comprises creating point adhesive contact by heating and pressure outside of the zone of the electroluminescent element
- between said interlayer sheet and another interlayer sheet called the rear interlayer sheet entrance-surface side -and/or between said interlayer sheet and another interlayer sheet called the front interlayer sheet exit-surface side,
and/or between the collimation optic and the asymmetric redirection optic or the holographic redirection optic and the interlayer sheet or another interlayer sheet the electroluminescent element and even the collimation optic and the asymmetric redirection optic or the electroluminescent element and the holographic redirection optic being in a through- or blind hole of one of said interlayer sheets and/or the electroluminescent element and even the collimation optic and the asymmetric redirection optic or the electroluminescent element and the holographic redirection optic being sandwiched between said interlayer sheet and the front or back other interlayer sheet.
